(19) Europäisches Patentamt
European Patent Office
Office européen des brevets

(11) **EP 4 057 525 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **22157771.1**

(22) Anmeldetag: **21.02.2022**

(51) Internationale Patentklassifikation (IPC):
**H04B 10/112** (2013.01)   **H04B 10/564** (2013.01)

(52) Gemeinsame Patentklassifikation (CPC):
**H04B 10/564; H04B 10/114; H04B 10/58**

(54) **OPTISCH-DRAHTLOSE VORRICHTUNG ZUM SENDEN EINES OPTISCH-DRAHTLOSEN SIGNALS**

OPTICAL WIRELESS DEVICE FOR TRANSMITTING A WIRELESS OPTICAL SIGNAL

DISPOSITIF OPTIQUE SANS FIL POUR TRANSMISSION D'UNE SIGNAL OPTIQUE SANS FIL.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2021 DE 102021201665**

(43) Veröffentlichungstag der Anmeldung:
**14.09.2022 Patentblatt 2022/37**

(73) Patentinhaber: **Fraunhofer-Gesellschaft zur Förderung
der angewandten Forschung e.V.
80686 München (DE)**

(72) Erfinder: **Kirrbach, René
01109 Dresden (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
**WO-A1-95/28777     US-A1- 2020 136 661
US-B1- 7 426 350     US-B2- 9 166 683**

• **JARUWATANADILOK S ET AL: "MODELING THE POINT-TO-POINT WIRELESS COMMUNICATION CHANNEL UNDER THE ADVERSE WEATHER CONDITIONS", IEICE TRANSACTIONS ON ELECTRONICS, INSTITUTE OF ELECTRONICS, TOKYO, JP, vol. E87-C, no. 9, 1 September 2004 (2004-09-01), pages 1455 - 1462, XP001209713, ISSN: 0916-8524**

## Beschreibung

Die vorliegende Erfindung bezieht sich auf eine optisch-drahtlose Vorrichtung, auf ein optisch-drahtloses Netzwerk, ein Verfahren zum Erstellen eines Informationsspeichers für eine optisch-drahtlose Vorrichtung und auf ein Verfahren zum Erstellen eines Informationsspeichers für eine optisch-drahtlose Vorrichtung. Die vorliegende Erfindung bezieht sich ferner auf einen adaptiven Transmitter für die optisch-drahtlose Kommunikation für analog modulierte Signale.

Moderne optisch-drahtlose Transceiver verwenden orthogonales Frequenzmultiplex (OFDM) um hohe Datenraten zu erreichen und eine hohe Robustheit gegenüber Mehrwegeausbreitung zu gewährleisten. OFDM wird dabei meistens mit adaptivem Bit-Loading kombiniert. Wenn das Empfangssignal und damit das Träger-zu-Rausch-Verhältnis (CNR) hoch ist, beispielsweise weil die Übertragungsdistanz gering ist, können mehr Bits pro Träger codiert werden. Das Produkt aus Symbolrate und der Summe der codierten Bits aller Träger entspricht der Datenrate. Die Datenrate lässt sich maximieren, indem die Symbolrate und/oder CNR erhöht wird. Eine höhere Symbolrate bedarf einer höheren Bandbreite. Diese wird allerdings durch die optischen Emitter, beispielsweise Leuchtdioden (LEDs); Laser oder Laserdioden, limitiert. Das CNR wiederum wird durch Rauschen in Folge von nicht-lineare Verzerrungen reduziert. Üblicherweise ist die Komponente mit den stärksten nicht-linearen Verzerrungen der optische Emitter (beispielsweise LED). Um diese Verzerrungen zu reduzieren und um möglichst hohe Spitzendatenraten zu erreichen, wird die Aussteuerung, das heißt die Signalamplitude am Transmitter (Sender), reduziert. Dadurch reduziert sich aber die Signalleistung und damit die Reichweite beziehungsweise die Abdeckungen der optisch-drahtlosen Datenverbindung.

In der Literatur wählt man heute eine Aussteuerung, die einen Kompromiss zwischen Datenrate und Reichweite darstellt. Da die nichtlinearen Verzerrungen und die Reichweite nichtlinear von der Aussteuerung abhängen, gibt es eine Aussteuerung bei der die Reichweite für eine definierte Datenrate maximal wird. [a][b][c]

Andere Ansätze umfassen beispielsweise eine nichtlineare Vor- oder Nachverzerrung des Signals, um die Nichtlinearität zu kompensieren [d]. Diese Ansätze sind allerdings komplex in der Dimensionierung und in der Herstellung.

WO 95/28777 bezieht sich auf ein optisches Kommunikationssystem mit einem Transmitter und einem Receiver zum dynamischen Anpassen der Datenrate und/oder der optischen Leistung des Transmitters.

"Modelling the Point-to-Point Wireless Communication Channel under the Adverse Wheather Conditions", Jaruwatanadilok et al in IEICE Transactions on Electronics, Bd. E87-C, Nr. 9, Seiten 1455-1462, XP 001209713 bezieht sich auf eine Wetterabhängigkeit optischer Übertragungsstrecken.

US 2020/0136661 A1 bezieht sich auf eine Optimierung einer Übertragungsleistung eines RF-Signals.

Es besteht ein Bedarf an höheren Datenübertragungsraten in optisch-drahtlosen Übertragungen, die eine zuverlässige Datenübertragung ermöglichen.

Wünschenswert wären demnach Transmitter für eine optisch-drahtlose Kommunikation, die sowohl eine hohe Datenrate als auch eine hohe Reichweite bereitstellen kann.

Die Aufgabe der vorliegenden Erfindung besteht deshalb darin, eine optisch-drahtlose Vorrichtung, ein optisch-drahtloses Netzwerk, Verfahren zum Erstellen von Informationsspeichern zur erfindungsgemäßen Verwendung sowie ein korrespondierendes Computerprogrammprodukt zu schaffen, die optisch-drahtlose Kommunikation mit hoher Datenrate und hoher Reichweite ermöglichen.

Diese Aufgabe wird durch den Gegenstand der unabhängigen Patentansprüche gelöst.

Ein Kerngedanke der vorliegenden Erfindung besteht darin, durch eine Anpassung eines Arbeitspunktes einer optischen Signalquelle und/oder durch Ändern eines Betriebszustandes einer elektronischen Signalquelle einer optisch-drahtlosen Vorrichtung eine Anpassung bspw. eine Kompensation oder Reduktion einer nichtlinearen Kanalverzerrung zu bewirken, um stets einen optimalen Kompromiss zwischen Datenrate und Reichweite zu erhalten, so dass stets beide Parameter optimiert werden können.

Gemäß einem Ausführungsbeispiel umfasst eine optisch-drahtlose Vorrichtung, die zum Senden eines optisch-drahtlosen Signals über einen optisch-drahtlosen Kanal eingerichtet ist, eine elektronische Signalquelle, die ausgebildet ist, um ein Datensignal bereitzustellen. Ferner umfasst die optisch-drahtlose Vorrichtung eine optische Signalquelle, die ausgebildet ist, um das Datensignal in das optisch-drahtlose Signal zu überführen und auszusenden. Die optisch-drahtlose Vorrichtung ist ausgebildet, um eine Kanalinformation zu erhalten, die eine mit einer nichtlinearen Kanalverzerrung des optisch-drahtlosen Kanals assoziierte Information aufweist und ist eingerichtet, um eine Anpassung einer eine Amplitudenvariation um einen Mittelwert beschreibende Aussteuerung der optischen Signalquelle durch Ändern eines Betriebszustandes der elektronischen Signalquelle durch Ändern einer Aussteuerung eines digitalen Signalprozessors, DSP, und/oder durch Anpassen einer Verstärkung eines Treibers der elektronischen Signalquelle zur Anpassung der nichtlinearen Kanalverzerrung auszuführen und/oder um eine Anpassung eines Arbeitspunktes der optischen Signalquelle zur Anpassung der nichtlinearen Kanalverzerrung auszuführen. Die Anpassung der nichtlinearen Kanalverzerrung umfasst eine Kompensation oder Reduktion der nichtlinearen Kanalverzerrung.

Gemäß einem Ausführungsbeispiel ist die Anpassung der nichtlinearen Kanalverzerrung abhängig von der momentanen Transmitter-Receiver-Anordnung oder der momentanen Kanaldämpfung.

Gemäß einem Ausführungsbeispiel umfasst ein optisch-drahtloses Netzwerk zumindest eine solche optisch-drahtlose Vorrichtung und darüber hinaus einen Empfänger zum Empfangen des optisch-drahtlosen Signals.

Gemäß einem nicht unter die Erfindung fallenden Ausführungsbeispiel umfasst ein Verfahren zum Einstellen eines Informationsspeichers für eine optisch-drahtlose Vorrichtung, um ein Anpassen einer Aussteuerung einer optischen Signalquelle zu ermöglichen, ein Anordnen eines Senders und eines Empfängers für ein Übermitteln eines optisch-drahtlosen Signals über einen optisch-drahtlosen Kanal. Das Verfahren umfasst ein wiederholtes Senden eines optisch-drahtlosen Signals für unterschiedliche Entfernungen zwischen dem Sender und dem Empfänger, so dass in jeder Entfernung eine Mehrzahl von Aussteuerungen für das Senden verwendet werden, was es ermöglicht, die ideale Aussteuerung für die vorliegende Kanaldämpfungen zu finden . Das Verfahren erfasst ein Ermitteln zumindest einer erzielbaren Datenrate und/oder eines Rauschabstands am Ort des Empfängers für jedes der gesendeten Signale sowie ein Ermitteln einer zu wählenden Aussteuerung für jede der Entfernungen, unter deren Verwendung eine Datenrate oder der Rauschabstand maximal ist. Das Verfahren umfasst ein Zusammenstellen der zu wählenden Aussteuerungen für die unterschiedlichen Entfernungen. In Kenntnis der Einstellungen zur Aussteuerung zum Erhalt der maximalen Datenrate oder des maximalen Rauschabstandes bei einer jeweiligen Kanaldämpfung kann bei Auftreten des entsprechenden Ereignisses im laufenden Betrieb die Aussteuerung so angepasst werden, dass immer noch die Datenrate oder der Rauschabstand maximal ist.

Gemäß einem nicht unter die Erfindung fallenden Ausführungsbeispiel umfasst ein Verfahren zum Erstellen eines Informationsspeichers für eine optisch-drahtlose Vorrichtung, um ein Anpassen eines Arbeitspunktes einer optischen Signalquelle zu ermöglichen, ein Anordnen eines Senders und eines Empfängers für ein Übermitteln eines optisch-drahtlosen Signals über einen optisch-drahtlosen Kanal. Das Verfahren umfasst ein wiederholtes Senden eines optisch-drahtlosen Signals für unterschiedliche Entfernungen zwischen dem Sender und dem Empfänger, so dass in jeder Entfernung eine Mehrzahl von Arbeitspunkten für das Senden verwendet werden.

Das Verfahren umfasst ein Ermitteln einer erzielbaren Datenrate und/oder eines Rauschabstands am Ort des Empfängers für jedes der gesendeten Signale sowie ein Ermitteln eines zu wählenden Arbeitspunktes für jede der Entfernungen, unter deren Verwendung eine Datenrate oder ein Rauschabstand maximal ist. Das Verfahren umfasst ferner ein Zusammenstellen der zu wählenden Arbeitspunkte für die unterschiedlichen Entfernungen. Das Verfahren zum Sammeln von Daten zur Anpassung des Arbeitspunktes kann somit in ähnlicher Weise erfolgen wie das Verfahren zum Sammeln von Informationen zur Aussteuerung einer optischen Signalquelle.

Weitere Ausführungsbeispiele beziehen sich auf ein Computerprogramm beziehungsweise auf einen Datenspeicher, der ein solches Computerprogramm zur Durchführung hierin beschriebener Verfahren gespeichert hat.

Weitere vorteilhafte Ausführungsbeispiele sind der Gegenstand abhängiger Patentansprüche.

Besonders bevorzugte Ausführungsformen der vorliegenden Erfindung werden nachfolgend Bezug nehmend auf die beiliegenden Zeichnungen erläutert. Es zeigen:

Fig. 1a      ein schematisches Blockschaltbild eines optisch-drahtlosen Netzwerks mit einer optisch-drahtlosen Vorrichtung gemäß einem Ausführungsbeispiel;

Fig. 1b      eine beispielhafte schematische Darstellung eines Graphen zur Erläuterung der Aussteuerung einer optischen Signalquelle in Übereinstimmung mit Ausführungsbeispielen;

Fig. 2a      eine schematische Darstellung beispielhafter Graphen zur Erörterung hierin beschriebener Ausführungsbeispiele, wozu eine erzielbare Datenrate über unterschiedliche Abstände angetragen ist;

Fig. 2b      eine beispielhafte Darstellung unterschiedlicher Verläufe von erzielbaren Datenraten DR/Mbps für unterschiedliche Transmitteraussteuerungen und im Hinblick auf den Gleichanteil der Empfangsleistung, gemäß einem Ausführungsbeispiel;

Fig. 3      ein schematisches Blockschaltbild eines optisch-drahtlosen Netzwerks gemäß einem Ausführungsbeispiel, bei dem die optisch-drahtlose Vorrichtung einen Transmitter aufweist;

Fig. 4      ein schematisches Blockschaltbild eines Teils einer Vorrichtung gemäß einem Ausführungsbeispiel, mit einem gegenüber Fig. 3 veränderten Transmitter;

Fig. 5      ein schematisches Blockschaltbild eines Teils einer Vorrichtung gemäß einem Ausführungsbeispiel, bei der eine Treiberschaltung ausgebildet ist, um eine basierend auf einem Steuersignal eingestellte variable Verstärkung umzusetzen;

Fig. 6      ein schematisches Blockschaltbild eines optisch-drahtlosen Netzwerks gemäß einem Ausführungsbeispiel, das im Vergleich zum optisch-drahtlosen Netzwerk aus Fig. 3 eine Rückkopplung durch einen Empfängers ermöglicht;

Fig. 7      ein schematisches Blockschaltbild eines optisch-drahtloses Netzwerks ähnlich zur Fig. 6 und gemäß einem Ausführungsbeispiel, wobei eine Messeinrichtung ausgebildet ist, um einen Wechselanteil des Verstärkersignals zu bestimmen;

Fig. 8      eine beispielhafte Gegenüberstellung erzielbarer Datenraten, DR, gegenüber einem an der Abszisse angetragenen Abstand und für unterschiedliche Arbeitspunkte der optischen Signalquelle gemäß einem Ausführungsbeispiel ;

Fig. 9      ein schematisches Blockschaltbild eines optisch-drahtlosen Netzwerks, gemäß einem Ausführungsbeispiel, bei dem empfängerseitig eine Prozessoreinrichtung eingerichtet ist, um das Steuersignal für die Einstellung der Treiberschaltung bereitzustellen;

Fig. 10a      ein schematisches Blockschaltbild eines Teils einer optisch-drahtlosen Vorrichtung gemäß einem Ausführungsbeispiel;

Fig. 10b      ein schematisches Blockschaltbild einer weiteren optisch-drahtlosen Vorrichtung gemäß einem Ausführungsbeispiel, die ein Regelungselement zum Empfang des Steuersignals aufweist;

Fig. 11      erneut manche der Kurven aus Fig. 2a;

Fig. 12a-c      jeweils eine beispielhafte Tabelle, zur Erläuterung des Erhalts einzustellender Werte an einer optisch-drahtlosen Vorrichtung gemäß einem Ausführungsbeispiel, wobei die Tabellen der untereinander durch die jeweiligen Eigenschaften verknüpft sind;

Fig. 13      ein schematisches Flussdiagramm eines bekannten Verfahrens, bei dem ein Ergebnis der Kanalschätzung zu einer veränderten Bitrate des Datensignals führt;

Fig. 14      ein schematisches Flussdiagramm eines Verfahrens gemäß einem Ausführungsbeispiel, das eine Änderung der Kanaldämpfung berücksichtigt;

Fig. 15      ein schematisches Blockschaltbild eines weiteren Verfahrens gemäß einem Ausführungsbeispiel, das das Verfahren aus Fig. 14 abwandelt;

Fig. 16      ein schematisches Flussdiagramm eines Verfahrens zum Ermitteln einer zu wählenden Aussteuerung einer optische Signalquelle gemäß einem Ausführungsbeispiel; und

Fig. 17      ein schematisches Flussdiagramm eines Verfahrens zum Bestimmen zu wählender Arbeitspunkte einer optischen Signalquelle gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres miteinander kombiniert werden, solange es nicht explizit gegenteilig beschrieben ist.

Manche der hierin erläuterten Ausführungsbeispiele werden im Zusammenhang mit optisch-drahtloser Kommunikation erläutert, wofür auch der sogleich erläuterte Begriff LiFi (Light-Fidelity) verwendet wird. Dieser wird gemäß Ausführungsbeispielen in Kombination mit der Erzeugung von Quantenschlüsseln, also kryptographischen Schlüsseln, die unter Verwendung von quantenbasierten Ansätzen erstellt werden, kombiniert. Die dadurch erhaltenen Vorteile sind auch in anderen Bereichen der drahtlosen Kommunikation einsetzbar, so dass die beschriebenen Ausführungsbeispiele nicht auf die optisch-drahtlose Kommunikation beschränkt sind, sondern auch in anderen Bereichen der drahtlosen Kommunikation umgesetzt werden können, beispielsweise im Bereich der Funkwellenkommunikation im Frequenzbereich ab ca. 800 MHz, wobei sich insbesondere Frequenzen und Techniken zur Strahlformung oder Beamforming eignen, wie es beispielsweise im Frequenzband ab 4 GHz möglich ist, aber auch bei höheren Frequenzen von zumindest 40 GHz, beispielsweise in etwa 50 GHz oder im 60 GHz-Bereich. Auch wenn Einrichtungen zur aktiven Richtfunkübertragung, also dem Beamforming, bevorzugt sind, können auch mechanische Einrichtungen, etwa Antennengehäuse, zur Strahlformung genutzt werden.

Gemäß Ausführungsformen der vorliegenden Erfindung können somit alternativ oder zusätzlich zu optisch-drahtloser Kommunikation auch Funkwellenlängen genutzt werden, insbesondere jene, die für eine Richtfunkübertragung besonders gut geeignet sind, etwa unter Verwendung sogenannter Beamforming-Techniken. Dies ist insbesondere vorteilhaft für Sender, die zu im Wesentlichen nichtlinearen Verzerrungen führen bzw. zur gesamten Nichtlinearität wesentlich beitragen, wie es im Fall des optischen Emitters gegeben ist aber auch bei anderen nichtlinearen Transmittern erfolgen kann, bspw. bei nichtlinearen Antennencharakteristika von Funkwellensendern.

Nachfolgende Ausführungsbeispiele beziehen sich auf eine optisch-drahtlose Signalübertragung oder Datenübertragung. Diese wird im Rahmen der hierin beschriebenen Ausführungsbeispiele auch als LiFi (Light Fidelity; Lichtübertragung) bezeichnet. Der Begriff "LiFi" bezieht sich dabei auf die Begriffe wie IrDA (Infrared Data Association) oder OWC (Optical Wireless Communication; optische drahtlose Kommunikation). Das bedeutet, die Ausdrücke "optisch-drahtlose Datenübertragung" und "LiFi" werden synonym verwendet. Als optisch-drahtlose Datenübertragung wird hierbei verstanden, ein elektromagnetisches Signal durch ein freies Übertragungsmedium, beispielsweise Luft oder ein anderes Gas oder ein Fluid, zu übertragen. Hierfür können beispielsweise Wellenlängen in einem ultravioletten (UV) Bereich mit zumindest 53 nm und dem Infrarotbereich, beispielsweise höchstens 1550 nm, verwendet werden, wobei auch andere Wellenlängen möglich sind, die sich von für Funkstandards benutzten Wellenlängen unterscheiden. Eine optisch-drahtlose Datenübertragung ist auch von einer fasergebundenen optischen Datenübertragung zu unterscheiden, die beispielsweise mittels Lichtwellenleiter oder Lichtwellenleiterkabel implementiert wird.

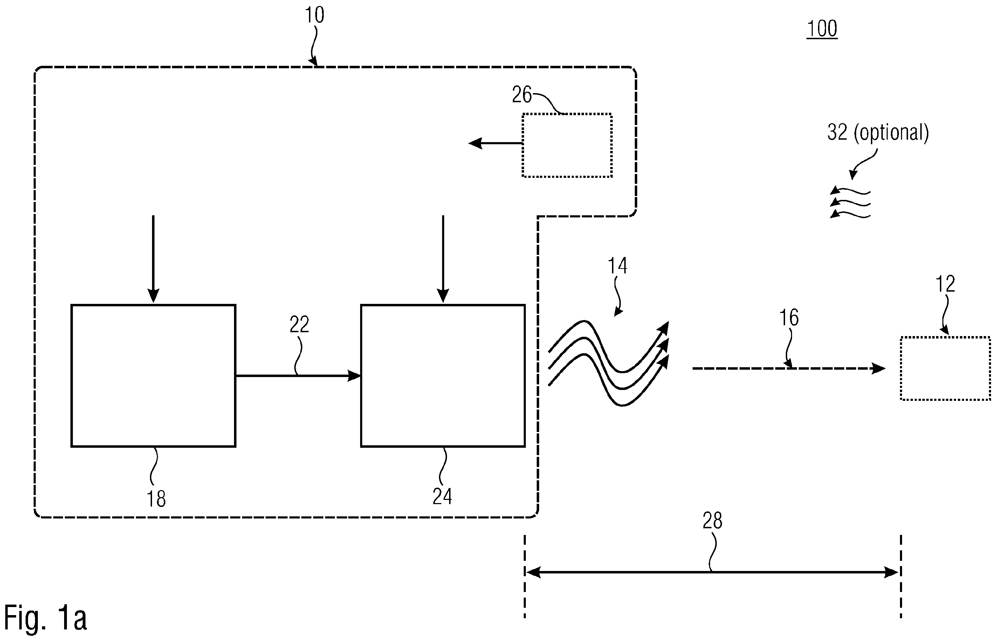

Fig. 1a zeigt ein schematisches Blockschaltbild eines optisch-drahtlosen Netzwerks 100 mit einer optisch-drahtlosen Vorrichtung 10 gemäß einem Ausführungsbeispiel und einem Empfänger bzw. Empfängervorrichtung 12, der zum Empfangen eines von der optisch-drahtlosen Vorrichtung 10 ausgesendeten Signals 14 eingerichtet ist. Die optisch-drahtlose Vorrichtung 10 kann zum Senden des optisch-drahtlosen Signals 14 eingerichtet sein und als optisch-drahtloser Sender/Transmitter betrieben werden. Ohne Einschränkungen kann die optisch-drahtlose Vorrichtung aber auch zum Empfang optisch-drahtloser Signale eingerichtet sein und beispielsweise ein optisch-drahtloser Transceiver sein. Ebenso kann die Empfängervorrichtung 12 ausgelegt sein, um ein optisch-drahtloses Signal zurück an die optisch-drahtlose Vorrichtung 10 zu senden, also als Transceiver gebildet sein. Ein Kanal 16 zwischen der optisch-drahtlosen Vorrichtung 10 und dem Empfänger 12 kann somit unidirektional oder auch bidirektional genutzt werden. Der Kanal 16 kann zu einer kanalinduzierten Verzerrung des optisch-drahtlosen Signals 14 führen, das bedeutet, eine Kanalverzerrung bereitstellen. Diese kann insbesondere nichtlinear sein und beispielsweise für unterschiedliche Frequenzbereiche oder Wellenlängenbereiche unterschiedlich wirken.

Die optisch-drahtlose Vorrichtung 10 umfasst eine elektronische Signalquelle 18, die ausgebildet ist, um ein Datensignal 22 bereitzustellen. Ferner umfasst die optisch-drahtlose Vorrichtung 10 eine optische Signalquelle 24, die ausgebildet ist, um das Datensignal 22 in das optisch-drahtlose Signal 14 zu überführen und auszusenden. Die optische Signalquelle 24 kann einen optischen Emitter aufweisen, beispielsweise eine Laserquelle oder eine Leuchtdiode, wobei eine Leuchtdiode bevorzugt ist. Ein Arbeitspunkt des optischen Emitters kann einem Gleichanteil der Stromaufnahme des optischen Emitters 24 entsprechen. Die elektronische Signalquelle 18 und die optische Signalquelle 24 können dabei direkt miteinander gekoppelt sein oder gar ein integriertes Bauelement bilden. Dies schließt jedoch eine Zwischenverarbeitung des elektronischen Datensignals 22 nicht aus, beispielsweise durch Verwendung eines Filters, Verstärkers oder dergleichen.

Die optisch-drahtlose Vorrichtung 10 ist ausgebildet, um eine Kanalinformation 26 zu erhalten, die mit einer nichtlinearen Verzerrung des Signals 14 im optisch-drahtlosen Kanal 16 assoziierte Informationen aufweist. Die Kanalinformation 26 kann hierbei beispielsweise eine Information angeben, die mit einer Entfernung oder Abstand 28 zwischen dem Empfänger 12 und der optisch-drahtlosen Vorrichtung 10 einhergeht oder diese direkt angibt, wobei hierzu beispielsweise ein kontinuierlicher oder ein diskreter Wertebereich möglich ist. Alternativ oder zusätzlich kann die Kanalinformation 26 auch mit einem Signal-zu-Rauschabstand korrelieren oder diesen angeben, wobei sich der Signal-zu-Rauschabstand auf eine Empfangsqualität des optisch-drahtlosen Signals 14 am Ort des Empfängers 12 beziehen kann. Eine derartige Information kann vom Empfänger 12 erhalten oder empfangen werden, kann aber beispielsweise unter Ausnutzung der Annahme der Kanalreziprozität auch vom Empfänger 12 geschätzt werden, indem vom Empfänger 12 ein optisch-drahtloses Signal empfangen wird, wobei es hierzu möglich, aber nicht notwendig ist, denselben Wellenlängenbereich zu verwenden wie für das optisch-drahtlose Signal 14.

Die optisch-drahtlose Vorrichtung 10 ist ausgebildet, um eine Anpassung einer Aussteuerung der optischen Signalquelle 24 aufgrund der Kanalinformation vorzunehmen, um zumindest teilweise eine Anpassung der nichtlinearen Kanalverzerrung auszuführen. Hierzu kann die optisch-drahtlose Vorrichtung 10 den Betriebszustand der elektronischen Signalquelle ändern, beispielsweise indem die Aussteuerung eines digitalen Signalprozessors (DSP) geändert wird und/oder indem eine Verstärkung eines Treibers der elektronischen Signalquelle 18 angepasst wird. Weitere Mittel sind ohne weiteres ebenfalls möglich. Alternativ oder zusätzlich zur Anpassung des Betriebszustandes der elektronischen Signalquelle 18 kann eine Anpassung eines Arbeitspunktes der optischen Signalquelle 24 durch die optisch-drahtlose Vorrichtung ausgeführt werden, um die Aussteuerung der optischen Signalquelle anzupassen.

Die Anpassung kann bspw. als zumindest teilweise Kompensation der nichtlinearen Kanalverzerrung ausgeführt werden, d. h., um der momentanen oder festgestellten oder derzeitigen nichtlinearen Kanalverzerrung entgegenzuwirken. Es können nichtlineare Vorverzerrungen und/oder Nachverzerrungen eingesetzt werden, welche die Linearität verbessern kann, was als Kompensation verstanden werden kann. Ausführungsbeispiele beziehen sich darauf, den Betriebszustand des Transmitters so wählen, dass die vorhandenen nichtlinearen Verzerrungen nicht mehr stören, was aber auch bedeuten kann bei bspw. großen Entfernungen starke Verzerrungen in Kauf zu nehmen. Eine Anpassung im Zusammenhang mit Ausführungsbeispielen kann dem Ziel einer Verbesserung der Signalqualität/Datenrate dienen. Dies kann für Fälle außer, dass die Aussteuerung erhöht oder der Arbeitspunkt verkleinert wird, auch als Reduktion verstanden werden.

Das Ändern des Betriebszustandes der elektronischen Signalquelle 18 und/oder die Anpassung des Arbeitspunktes der optischen Signalquelle 24 kann von einer jeweiligen Steuerungseinrichtung (nicht dargestellt) vorgenommen werden, die die Kanalinformation 26 auswertet und die einzustellenden Parameter für die elektronische Signalquelle 18 beziehungsweise die optische Signalquelle 24 ableitet. Hierzu kann beispielsweise ein Informationsspeicher vorgesehen sein, der die einzustellenden Parameter direkt angibt oder der eine Berechnungsregel hinterlegt hat, aus welchem unter Verwendung der Kanalinformation 26 die einzustellenden Parameter abgeleitet werden können.

Gemäß einem Ausführungsbeispiel kann die Kanalinformation 26 auf einem Rauschabstand, etwa ein Signal-zu-Rauschabstand (Signal-to-Noise Ratio, SNR) und/oder einem Träger-zu-Rausch-Verhältnis (Carrier-to-Noise Ratio, CNR) basieren. Der Rauschabstand kann sich auf das optisch-drahtlose Signal 14 beziehen und die Kanalinformation 26 kann ferner auf einer Signalleistung des optisch-drahtlosen Signals am Empfänger 12 basieren, etwa einer spektralen Leistungsdichte (Power Spectral Density, PSD) oder einem Gleichanteil des Photostroms an der Anode oder Kathode einer Photodiode des Empfängers 12. Diese Werte hängen ebenso von dem Abstand 28 ab, so dass aus dem Abstand 28 auf den Rauschabstand und/oder die Signalleistung am Ort des Empfängers 12 zurückgeschlossen werden kann, zumindest unter Berücksichtigung der in der optisch-drahtlosen Vorrichtung 10 eingestellten Werte.

Die optisch-drahtlose Vorrichtung 10 kann ausgebildet sein, um die Anpassung der Aussteuerung der optischen Signalquelle 24 im Betrieb anzupassen, das bedeutet, unterschiedliche Einstellungen für die Aussteuerung der optischen Signalquelle zu unterschiedlichen Zeitpunkten einzustellen, etwa beim Feststellen einer Veränderung des optisch-drahtlosen Kanals 16. Gemäß einem Ausführungsbeispiel ist das optisch-drahtlose Signal 14 ein erstes optisch-drahtloses Signal, das in einem ersten Sendeintervall ausgesendet wird. Zu einem späteren zweiten Sendeintervall wird ein späteres zweites optisch-drahtloses Signal durch die Vorrichtung 10, etwa unter Verwendung der optischen Signalquelle 24 ausgesendet. Die optisch-drahtlose Vorrichtung 10 ist ausgebildet, um für ein Senden dieses späteren optisch-drahtlosen Signals in dem späteren zweiten Sendeintervall festzustellen, dass eine Kanaldämpfung verglichen mit dem ersten Sendeintervall gestiegen ist, und um die Aussteuerung zu erhöhen und/oder um den Arbeitspunkt zu verringern, um von einer größeren Signalaussteuerung/ Signalleistung zu profitieren bzw. die Verlustleistung zu reduzieren, wobei größere nichtlineare Verzerrungen in Kauf genommen werden, welche aber in Bezug auf Datenrate / Fehlerrate aber nicht ins Gewicht fallen. Alternativ oder zusätzlich kann die optisch-drahtlose Vorrichtung ausgebildet sein, um für das Senden des späteren Signals festzustellen, dass eine Kanaldämpfung verglichen mit dem ersten Sendeintervall verringert ist, und um die Aussteuerung zu verringern und/oder um den Arbeitspunkt zu erhöhen, um so die nichtlinearen Verzerrungen bspw. der elektronischen Signalquelle zu verringern. Eine Verringerung der Aussteuerung kann beispielsweise durch geringere Leistung der elektronischen Signalquelle 18 eingerichtet werden. Die Einstellung des Arbeitspunktes wird im Zusammenhang mit hierin beschriebenen Ausführungsbeispielen detailliert erörtert.

Die Verbesserung oder Verschlechterung des Kanals, das bedeutet, das Feststellen einer verringerten oder erhöhten Kanaldämpfung, kann der optisch-drahtlosen Vorrichtung 10 explizit oder implizit mitgeteilt werden, etwa indem entsprechende Werte für den Rauschabstand oder der Signalleistung am Empfänger 12 mitgeteilt werden. Alternativ oder zusätzlich kann die optisch-drahtlose Vorrichtung 10 entsprechende Werte aus selbst empfangenen, optisch-drahtlosen Signalen schätzen, etwa durch einen Empfang eines Signals 32. Gemäß einem Ausführungsbeispiel ist die optisch-drahtlose Vorrichtung 10 ausgebildet, um eine Kanaldämpfung zu schätzen und ist ausgebildet, um basierend auf einer Referenzinformation, die ein Rauschen am Empfänger 12 des optisch-drahtlosen Kanals 16 anzeigt, die nichtlineare Verzerrung zu schätzen.

Gemäß einem Ausführungsbeispiel ist die optisch-drahtlose Vorrichtung 10 ausgebildet, um die Kanaldämpfung basierend auf einer Signalleistung an dem Empfänger 12 und einer Signalleistung an dem Sender des optisch-drahtlosen Kanals 16, also der optischen Kanalquelle 24, zu schätzen.

Gemäß einem Ausführungsbeispiel umfasst die optisch-drahtlose Vorrichtung 10 einen nicht dargestellten Informationsspeicher und/oder einen nicht dargestellten Kanalschätzer, der ausgebildet ist, um Informationen auszugeben, die einen Zusammenhang zwischen einem in dem optisch-drahtlosen Kanal 16 gesendeten Signal und der nichtlinearen Verzerrung anzeigen.

Gemäß einem Ausführungsbeispiel basiert die Kanalinformation 26 zumindest teilweise auf einer Rückmeldung des Empfängers 12 bezüglich einer Signalleistung des optisch-drahtlosen Signals 14 am Empfänger 12, auf einem Rauschabstand des optisch-drahtlosen Signals 14 am Empfänger 12 und/oder einer Fehlerrate. Der Rauschabstand und die Fehlerrate hängen dabei unmittelbar miteinander zusammen, weswegen hierin ein Bezug zum Rauschabstand auch gleichzeitig einen Bezug zur Fehlerrate herstellt. Für die Rückmeldung kann diese Information explizit angegeben werden oder anhand anderer Informationen, etwa einem Index einer Look-Up-Table oder dergleichen angegeben werden. Gemäß einem Ausführungsbeispiel ist die optisch-drahtlose Vorrichtung 10 ausgebildet, um das optisch-drahtlose Signal 14 über den optisch-drahtlosen Kanal 16 zu senden. Optional kann die Vorrichtung 10 für den Empfang eines optisch-drahtlosen Signals 32 ausgebildet sein, welches möglicherweise über den optisch-drahtlosen Kanal 16 empfangen werden kann, etwa ausgehend vom Empfänger 12 oder einer anderen Vorrichtung. Die optisch-drahtlose Vorrichtung 10 kann ausgebildet sein, um die Kanalschätzung des optisch-drahtlosen Kanals 16 basierend auf dem optisch-drahtlosen Signal 32 auszuführen, um einen Rauschabstand des Signals 32 zu bestimmen.

Alternativ oder zusätzlich hierzu kann die optisch-drahtlose Vorrichtung 10 ausgebildet sein, um die Kanalinformation 26 von dem Empfänger 12 des optisch-drahtlosen Signals 14 zu empfangen. Die optisch-drahtlose Vorrichtung 10 kann ausgebildet sein, um basierend auf einer Kanalinformation dergestalt, dass diese eine gegenüber einem vorhergehenden Sendeintervall verringerte Empfangsleistung und/oder einen reduzierten Rauschabstand am Empfänger des optisch-drahtlosen Signals anzeigt, die Aussteuerung der optischen Signalquelle 24 anzupassen, indem ein Wechselanteil des elektronischen Signals 22 für ein späteres optisch-drahtloses Signal hin zu einem zweiten Wechselanteil erhöht wird. Hierdurch wird der Arbeitspunkt der optischen Signalquelle 24 angepasst.

Alternativ oder zusätzlich hierzu kann die optisch-drahtlose Vorrichtung 10 ausgebildet sein, um zur Anpassung der Aussteuerung der optischen Signalquelle 24 einen Betriebszustand einer Treiberschaltung der elektronischen Signalquelle 18 anzupassen, um die Aussteuerung der optischen Signalquelle 24 hierdurch anzupassen. Eine derartige Treiberschaltung kann ein Verstärkerelement aufweisen, das ausgebildet ist, um ein empfangenes Prozessorsignal zu verstärken oder dieses in einen Strom zu überführen. Die optisch-drahtlose Vorrichtung 10 kann ausgebildet sein, um eine Verstärkung des Verstärkerelements anzupassen, um den Betriebszustand der Treiberschaltung zu ändern, um hierdurch die nichtlineare Verzerrung an der optischen Signalquelle anzupassen. Beispielsweise kann die Treiberschaltung ein anpassbares Dämpfungsglied umfassen, um die Verstärkung des Verstärkerelements anzupassen. Alternativ oder zusätzlich kann eine aktive Anpassung eines Verstärkungsfaktors des Verstärkerelements durch die Treiberschaltung eingestellt werden.

Das Verstärkerelement kann mit einer Widerstandsschaltung gekoppelt sein, die die Verstärkung einstellt. Die optisch-drahtlose Vorrichtung 10 kann ausgebildet sein, um die Verstärkung zumindest näherungsweise kontinuierlich und/oder Widerstandswerte diskret einzustellen. Eine kontinuierliche Veränderung kann beispielsweise unter Verwendung eines Potentiometers erfolgen. Die Widerstandsschaltung kann alternativ oder zusätzlich eine Mehrzahl von Schaltungszuständen aufweisen, in denen voneinander verschiedene Widerstandswerte zum Einstellen der Verstärkung mit dem Verstärkerelement gekoppelt sind. Die optisch-drahtlose Vorrichtung 10 kann ausgebildet sein, um zum Ändern der Ansteuerung einen aus dieser Mehrzahl von Schaltungszuständen auszuwählen und einzustellen.

Gemäß einem Ausführungsbeispiel kann die elektronische Signalquelle 18 einen Signalprozessor, insbesondere einen digitalen Signalprozessor, DSP, aufweisen, der ausgebildet ist, um ein Prozessorsignal an die Treiberschaltung bereitzustellen. Die Treiberschaltung kann ausgebildet sein, um deren Verstärkung entsprechend des Prozessorsignals anzupassen. Der Signalprozessor kann ausgebildet sein, um einen Wechselanteil des Prozessorsignals mittels digital-zu-analog-Wandler anzupassen, um ein unterschiedlich starkes Signal in die Treiberschaltung einzuspeisen.

In anderen Worten beschreiben Ausführungsbeispiele der vorliegenden Erfindung einen optisch-drahtlosen Transmitter, der die Problematik der Emitter-Nichtlinearität durch eine adaptive AC-Aussteuerung adressiert. Die AC-Aussteuerung richtet sich nach der derzeitigen Kanaldämpfung, welche durch geometrische Kanalverluste oder Absorption im Kanal entsteht. Bei geringer Entfernung sind die Kanalverluste gering, so dass das Empfangssignal stark ist. Nun wird die Aussteuerung reduziert, so dass die nichtlinearen Verzerrungen am Emitter und in den übrigen Transmitterkomponenten reduziert werden. In der Folge lässt sich ein höheres CNR und damit eine höhere Spitzendatenraten erreichen. Ist die Kommunikationsdistanz und damit die Kanaldämpfung hoch, wird die Aussteuerung erhöht. Eine höhere Sendeleistung geht mit einer höheren Reichweite der Verbindung einher. Ist die Steuerung richtig ausgelegt, erhöht sich gleichzeitig auch die Datenrate über der gesamten Entfernung. Das Bit-Loading führt bei einer größeren Kommunikationsdistanz dazu, dass eine Reduzierung der Modulationstiefe vorteilig ist. Durch die höhere Aussteuerung verstärken sich zwar die nichtlinearen Verzerrungen, aufgrund der geringeren Modulationstiefe ist ein besonders hohes CNR aber möglicherweise gar nicht notwendig. Sobald beispielsweise das Rauschen aus den nichtlinearen Verzerrungen von einem anderen Rauschfaktor übertroffen wird (beispielsweise internes Receiverrauschen), vergrößert eine höhere Signalaussteuerung die Signalleistung mehr als die Rauschleistung anwächst. In der Folge steigt das CNR und damit die Datenrate.

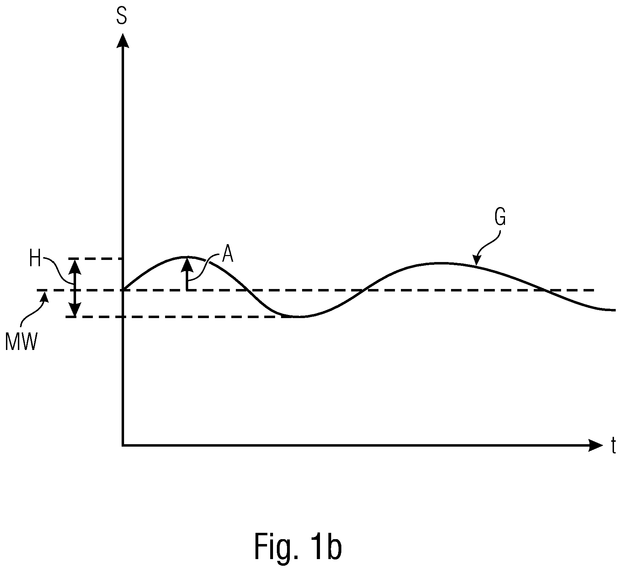

Fig. 1b zeigt eine beispielhafte schematische Darstellung eines Graphen mit einer Kurve G, die beispielhaft eine Signalamplitude S eines optischen Emitters einer optischen Signalquelle, etwa der Signalquelle 24, über die Zeit twiedergibt. Um einen möglicherweise von einem bereitgestellten Strom, der bspw. den Arbeitspunkt beschreibt, eingestellten Mittelwert MW, der einen Gleichanteil beschreiben kann, kann das Signal mit einem Wechselanteil mit einem Wertebereich H, der durch eine Amplitude A beschrieben werden kann, variieren. Der Betriebszustand der Signalquelle 24 bzw. der Wertebereich H kann verändert werden, indem der Wert des Mittelwerts variiert wird, was bspw. über einen Arbeitspunkt der optischen Signalquelle und/oder über einen Gleichanteil des in die optische Signalquelle gespeisten elektrischen Signals 18 erfolgen kann. Auch kann eine Veränderung des Wertebereis H zu einer veränderten Aussteuerung führen, was bspw. über eine Veränderung der Amplitude des elektronischen Signals, etwa über variable Verstärkungsfaktoren, erfolgen kann. Unter einer Aussteuerung kann hierin eine Amplitudenvariation verstanden werden, die von einem adaptiven Arbeitspunkt verschieden ist. Beides zusammen kann unter dem Begriff des Betriebszustandes zusammengefasst werden.

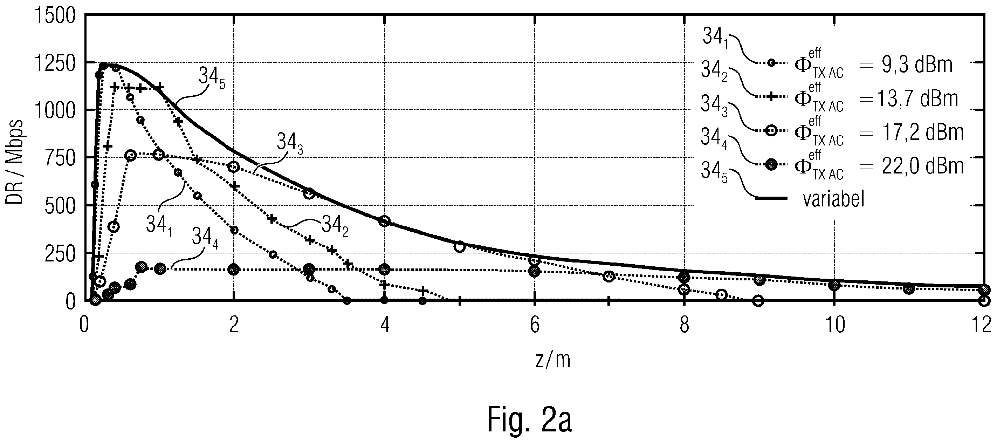

Fig. 2a zeigt beispielhafte Graphen $34_1$ bis $34_5$ zur Erörterung hierin beschriebener Ausführungsbeispiele. An der Abszisse ist beispielhaft der Abstand 28 aus Fig. 1a dargestellt und mit dem Parameter $z$ in der Einheit Meter (m) bezeichnet. An der Ordinate ist die Datenrate, *DR,* in der Einheit Mbps bezeichnet, die in dem nicht einschränkenden Experiment, das durch die unterschiedlichen Kurven $34_1$ bis $34_5$ repräsentiert ist, erzielt wurde.

Die gestrichelten Kurven zeigen Messwerte für verschiedene AC-TransmitterAussteuerungen. Die Werte entsprechen dem Effektivwert des AC-Anteils der optischen Sendeleistung. Die durchgezogene Linie verdeutlicht, dass ein adaptiver Transmitter die Performanz der Einhüllenden aller Kurven erreicht. Die Änderung der Aussteuerung bezieht sich zunächst auf den AC-Signalanteil.

Unterschiedliche Kurven $34_1$ bis $34_4$ unterscheiden sich bezüglich der eingestellten Transmitteraussteuerung, die sich auf die optische Signalquelle 24 bezieht. Für unterschiedliche Aussteuerungen, welche durch den Effektivwert (eff) des Wechselanteils (AC) der optischen Transmitter (TX) Leistung $\Phi_{TX\,AC}^{eff}$ von 9,3 dBm, 13,7 dBm, 17,2 dBm beziehungsweise 22,0 dBm repräsentiert werden, ergeben sich für unterschiedliche Abstände z unterschiedliche Datenraten. Im direkten Vergleich der Kurven $34_1$ bis $34_4$ untereinander ist beispielsweise erkennbar, dass eine niedrige Aussteuerung bei geringem Abstand, was einer vergleichsweise geringen Kanaldämpfung entspricht, zu höheren Datenraten führen kann als größere Aussteuerungen, aufgrund der Reduktion nichtlinearer Verzerrungen im Transmitter und Receiver. Für größere Entfernungen z bieten jedoch höhere Aussteuerungen Vorteile, wie es beispielsweise an den Kurven $34_3$ für den Abstand von 6 Metern und die Kurve $34_4$ für Abstände größer als 7 Meter erkennbar ist.

Eine variable Aussteuerung gemäß hierin beschriebener Ausführungsbeispiele, die exemplarisch durch die Kurve $34_5$ repräsentiert ist, ermöglicht somit für unterschiedliche Abstände beziehungsweise unterschiedliche Kanaldämpfungen unter Berücksichtigung der nichtlinearen Verzerrungen eine stets hohe erzielbare Datenrate, was vorteilhaft ist.

In anderen Worten zeigt Fig. 2a die Datenrate eines optisch-drahtlosen Transceivers über der Reichweite. Der Transceiver überträgt OFDM-Signale mit adaptivem Bit-Loading und passt so die Datenrate an die Kanaldämpfung an. Es sind Kurven für verschiedene Transmitterausteuerungen dargestellt. $\Phi_{TX\,AC}^{eff}$ codiert dabei den Effektivwert des AC-Anteils der optischen Leistung. Die gestrichelten Kurven entsprechen den Konfigurationen, von denen in einer konventionellen Lösung eine ausgewählt wird. Eine hohe Transmitterleistung $\Phi_{TX\,AC}^{eff}$ (starke Aussteuerung) geht dabei mit geringer maximaler Datenrate (wegen der nichtlinearen Verzerrungen), aber hoher Reichweite einher. Gleichzeitig geht eine geringere Transmitterleistung $\Phi_{TX\,AC}^{eff}$ (geringere Aussteuerung) mit hoher maximaler Datenrate, aber geringer Reichweite einher. Die hierin beschriebene adaptive Aussteuerung erhöht mit steigender Kommunikationsdistanz $z$ die Aussteuerung, um die Datenrate *DR* in der Entfernung zu erhöhen. Gelingt dies, entspricht der DR-z-Graph der Einhüllenden der Kurven der einzelnen Konfigurationen. Es ist klar ersichtlich, wie sich die Reichweite bzw. die Datenrate gegenüber konventionellen Ansätzen erhöht.

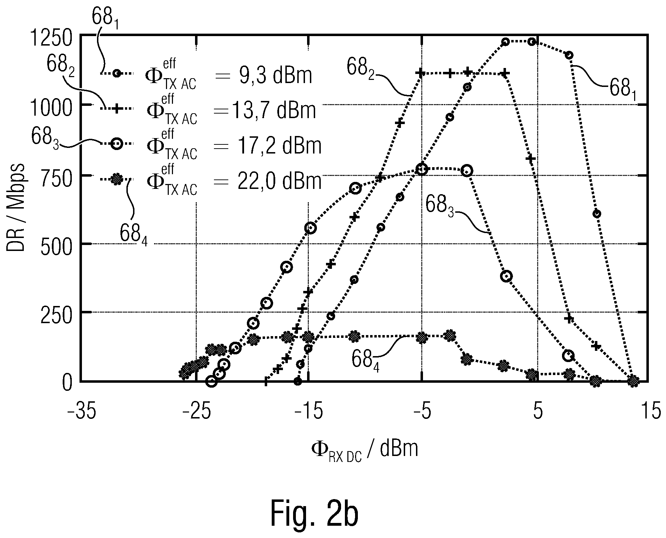

Fig. 2b zeigt eine beispielhafte Darstellung unterschiedlicher Verläufe von erzielbaren Datenraten DR/Mbps für unterschiedliche Transmitteraussteuerungen $\Phi_{TX\,AC}^{eff}$ und im Hinblick auf den Gleichanteil der Empfangsleistung ($\Phi_{RX\,DC}$/dBm). Vergleichend hierzu wurde die *DR* in Fig. 2a über der Kommunikationsdistanz z abgetragen.

Die unterschiedlichen Kurven $68_1$ bis $68_4$ bezeichnen dabei die unterschiedlichen Effektivwerte des Wechselanteils der optischen Transmitterleistung $\Phi_{TX\,AC}^{eff}$.

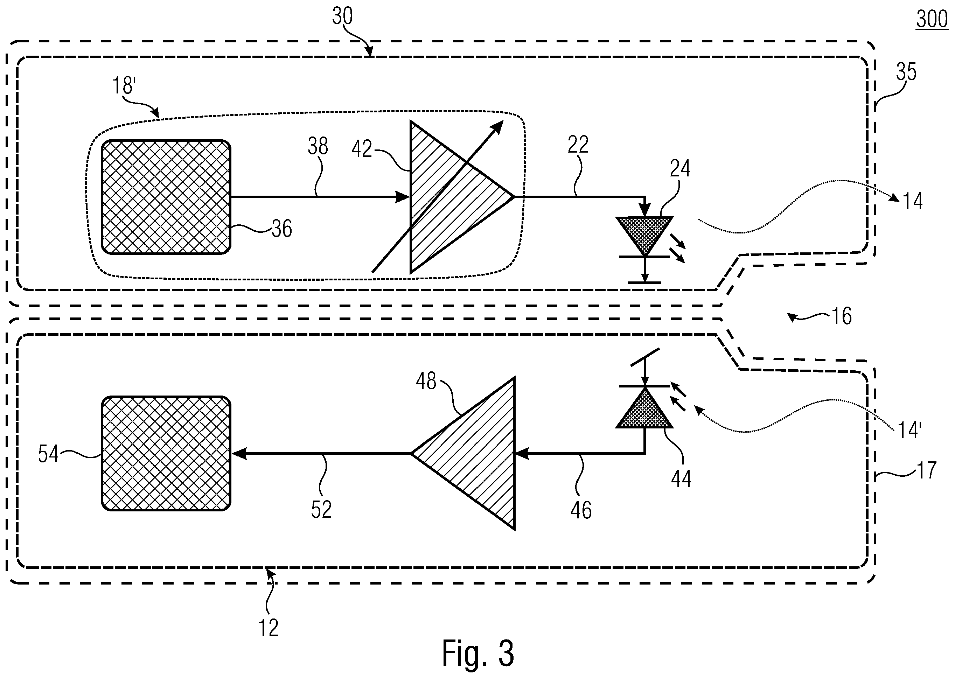

Fig. 3 zeigt ein schematisches Blockschaltbild eines optisch-drahtlosen Netzwerks 300 gemäß einem Ausführungsbeispiel. Das optisch-drahtlose Netzwerk umfasst eine optisch-drahtlose Vorrichtung 30 gemäß einem Ausführungsbeispiel und den Empfänger 12, der verglichen mit der Fig. 1a detailliert dargestellt ist. Der Empfänger 12 kann beispielsweise einen Empfänger oder Receiver 17 umfassen, der zum Empfang des optisch-drahtlosen Signals 14' eingerichtet ist.

Die Vorrichtung 30 kann dieselben Funktionen umfassen wie die Vorrichtung 10. Die Vorrichtung 30 kann einen Transmitter 35 umfassen, welcher beispielsweise eine elektronische Signalquelle 18' und die optische Signalquelle 24 umfassen kann. Eine elektronische Signalquelle 18' der Vorrichtung 30 umfasst beispielshaft einen Signalprozessor 36, der ausgebildet ist, um ein Prozessorsignal 38 auszugeben und an eine Treiberschaltung 42 mit möglicherweise veränderlichem Verstärkungsfaktor anzulegen, um das Datensignal 22 zu erhalten. Die optische Signalquelle 24 ist eingerichtet, um das Datensignal 22 zu empfangen und um das optisch-drahtlose Signal 14 auszusenden. Nach Durchlaufen des Kanals 16 wird ein verzerrtes Signal 14' mit einem Photodetektor 44 des Empfängers 12 empfangen, der ein Empfangssignal basierend hierauf bereitstellen kann. Dieses Empfangssignal 46 kann einem Verstärker 48 des Empfängers 12 zugeführt werden, der ausgebildet sein kann, um ein verstärktes Signal 52 bereitzustellen, welches einem Signalprozessor, beispielsweise einem DSP, 54 bereitgestellt werden kann, um die von der Vorrichtung 30 ausgesendeten Informationen zu verarbeiten.

In anderen Worten zeigt Fig. 3 eine optisch-drahtlose Datenübertragungsstrecke, welche den Transmitter 30 und dem Receiver 17 umfasst. Das System 300 ist vereinfacht unidirektional dargestellt, kann in der Realität aber auch bidirektional ausgeführt sein. Ein digitaler Signalprozessor 36 (DSP) speist ein moduliertes Datensignal 38 in den Treiber 42 des optisch-drahtlosen Transmitters 30 ein. Im System 300 ist der Treiber die Komponente mit variabler Verstärkung. In einem alternativen Ausführungsbeispiel kann alternativ oder zusätzliche auch der DSP 36 ein variables Ausgangslevel mittels analog-digital-Wandler bereitstellen. Entscheidend ist, dass am Ausgang des Treibers 42 ein Signal 22 in den optisch-drahtlosen Emitter 24 (bspw. Leuchtdiode oder Laserdiode) eingespeist wird, dessen Aussteuerung variabel anpassbar ist. Das emittierte optische Signal wird mit 14 bezeichnet, wenn es ausgesendet wird und mit 14', wenn es auf einen Receiver trifft. Der Photodetektor 44 (bspw. Photodiode) detektiert das Signal 14' und konvertiert es in das Empfangssignal 46. Das Signal 46 wird von einem Verstärker 48 (bspw. Transimpedanzverstärker) verstärkt. Das verstärkte Signal 52 wird in einen DSP 54 eingespeist, in dem es demoduliert und weiterverarbeitet wird. Bei Transceivern zur bidirektionalen Datenverbindung formt der Transmitter 35 und der Receiver 17 einen Transceiver. In diesem Fall kann ein DSP die Funktionen von Block 36 und 54 vereinen.

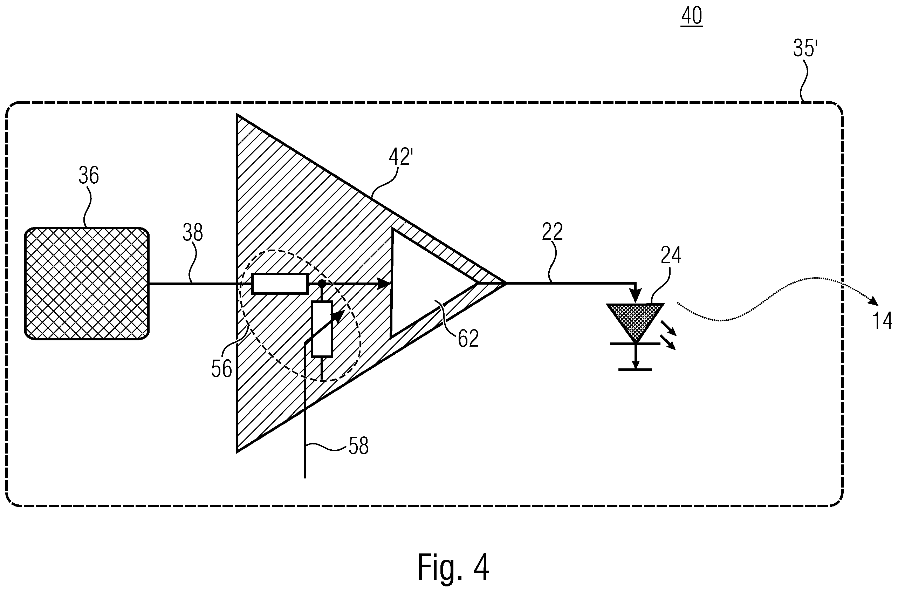

Fig. 4 zeigt ein schematisches Blockschaltbild eines Teils einer Vorrichtung 40, insbesondere einen Transmitter 35' hiervon. In dem Transmitter 35' ist beispielsweise das Konzept des Änderns des Betriebszustandes der elektronischen Signalquelle zur Anpassung der nichtlinearen Kanalverzerrung dargestellt. Im Ausführungsbeispiel der Fig. 4 ist hierzu eine analoge Realisierung einer variablen Verstärkung des Verstärkers beziehungsweise der Treiberschaltung 42 dargestellt. Die Verstärkungsregelung kann dabei stetig oder stufenweise erfolgen. Die Treiberschaltung 42 umfasst dabei ein anpassbares Dämpfungsglied 56 beziehungsweise eine Dämpfungsschaltung, die ausgebildet ist, um die Verstärkung des Verstärkerelements anzupassen. In Fig. 4 erfolgt eine Realisierung der variablen Treiberverstärkung mittels des variablen Dämpfungsgliedes 56 im Treiber 42, der beispielsweise über ein Steuersignal 58 gesteuert werden kann. Ein Ausgang eines Verstärkers 62, das heißt, das Datensignal 22 kann dadurch angepasst werden.

Das Steuersignal 58 kann auf zumindest einer aus mehreren möglichen Informationsquellen basieren und die entsprechende Information als analoges Signal, etwa vermittels einer Signalamplitude, einer Frequenz, einem ON-OFF-Pegel oder dergleichen transportieren. Alternativ kann das Steuersignal 58 eine Nachricht im Rahmen eines Kommunikationsprotokolls umfassen, das eine entsprechende Information zum Steuern des jeweiligen Elements an der Vorrichtung 40 trägt und bspw. decodiert oder interpretiert wird. Die Informationsquelle kann sich mittelbar oder unmittelbar also explizit oder implizit auf eine Messgröße beziehen, die in Zusammenhang mit dem Kanal oder der Kanaldämpfung steht, bspw. ein Abstand zwischen Sender/Empfänger, eine resultierende Veränderung in einem Gleichanteil oder Wechselanteil eines empfangenen Signals oder dergleichen. Alternativ kann die Nachricht implizit oder explizit angeben, welche Einstellung an der sendenden Vorrichtung vorzunehmen ist.

Für die Anpassung der Aussteuerung der optischen Signalquelle 24 kann die Kanalinformation auf einem Gleichanteil eines von einem Empfänger des optisch-drahtlosen Kanals 16 empfangenen optisch-drahtlosen Signals, etwa dem Signal 14, basieren und mit einer Anpassung eines Dämpfungsglieds der elektronischen Signalquelle am Sender, etwa der Vorrichtung 40, assoziiert sein. Alternativ oder zusätzlich kann zur Anpassung der Aussteuerung der optischen Signalquelle 24 die mit dem Steuersignal 58 transportierte Kanalinformation auf einem Wechselanteil eines von einem Empfänger des optisch-drahtlosen Kanals 16 empfangenen optisch-drahtlosen Signals, etwa dem Signal 14, basieren und mit einer Anpassung eines Verstärkungsfaktors der elektronischen Signalquelle assoziiert sein.

Gemäß Ausführungsbeispielen ist es möglich, aber nicht notwendig, einen Informationsspeicher, etwa in Form einer Look-Up-Tabelle oder dergleichen in der sendenden Vorrichtung vorzusehen. In dem Informationsspeicher können unterschiedliche vordefinierte Werte für die Aussteuerung gespeichert sein, die mit unterschiedlichen Werten der Kanalverzerrung assoziiert sind. Die optisch-drahtlose Vorrichtung kann ausgebildet sein, um aus dem Informationsspeicher unter Verwendung der Kanalinformation 26 einen einzustellenden Wert für die Aussteuerung zu erhalten und anzuwenden, beispielsweise einen Wert für das Signal 58.

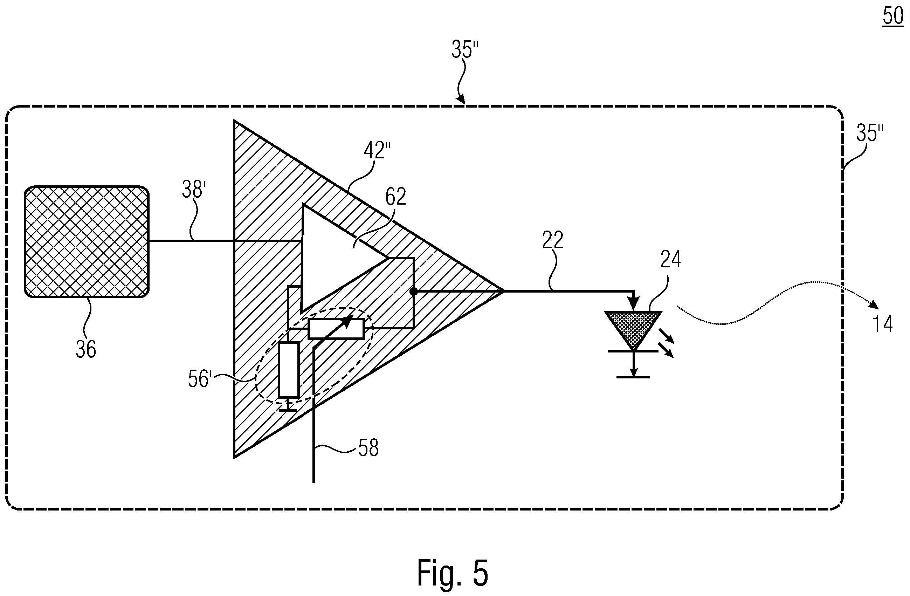

Fig. 5 zeigt ein schematisches Blockschaltbild eines Teils einer Vorrichtung 50, bei der eine Treiberschaltung 42" ausgebildet ist, um eine basierend auf dem Steuersignal 58 eine variable Verstärkung der Treiberschaltung 42" bereitzustellen. Hierzu kann in einer Schaltung 56'ein Zusammenwirken mit dem Verstärkerelement 62 variiert werden und somit die Verstärkung der Treiberschaltung 42" eingestellt werden, um die Aussteuerung der optischen Signalquelle 24 anzupassen.

Das Steuersignal 58 der Fig. 4 und/oder der Fig. 5 kann dabei abhängig von der Kanalinformation 26 in Fig. 1a gewählt werden, so dass die Einstellung der Treiberschaltung 42' und/oder 42" abhängig von der Kanalinformation erfolgt, um die nichtlineare Verzerrung zumindest teilweise zu kompensieren.

Eine Umsetzung von Ausführungsbeispielen in Übereinstimmung mit der hierin beschriebenen Erfindung kann somit eine Implementierung im Transmitter umfassen. In anderen Worten kann im Transmitter 35 des Systems 300 die adaptive Aussteuerung analog realisiert sein. Gemäß Ausführungsbeispielen kann die adaptive Aussteuerung ganz oder teilweise digital realisiert sein. Bei der analogen Realisierung besitzt der Treiberschaltkreis 42 eine variablere Verstärkung. Die Verstärkungsregelung erfolgt beispielsweise stetig oder stufenweise. Die Verstärkung wird beispielsweise variiert, indem ein einstellbares Dämpfungsglied eingesetzt wird (Fig. 4) oder der aktive Verstärkungsfaktor geregelt wird (Fig. 5). Beide Realisierungen werden mit dem Steuersignal 58 angesteuert.

Fig. 4 zeigt dabei eine Realisierung der variablen Treiberverstärkung mittels variablen Dämpfungsglied 56 im Treiber und Fig. 5 eine Realisierung der variablen Treiberverstärkung mittels variabler Verstärkung durch das Widerstandsnetzwerkes 56'im Treiber.

Mit 62 ist ein Verstärker bezeichnet, der im Zusammenhang mit der variablen Beschaltung und/oder aufgrund variabler Ansteuerung zu einer veränderlichen Verstärkung führen kann. Beispielsweise kann eine veränderliche Beschaltung mit einer Dämpfungsschaltung 56 eingestellt werden. Das bedeutet, die Anpassung der Aussteuerung des Emitters 24 kann durch Anpassen einer Ansteuerung des Verstärkerelements 42'/42", etwa durch eine Signalamplitude und/oder eines Effektivwerts eines Wechselanteils des Signals 38, erfolgen und/oder durch Ändern eines Betriebszustands des Verstärkerelements, etwa zum Einstellen des Verstärkungsfaktors.

Die dargestellten Realisierungen sind Entwurfsbeispiele im Zusammenhang mit Ausführungsformen der vorliegenden Erfindung. Es ist selbstverständlich denkbar, auch den jeweilig anderen Widerstand zu variieren und den variablen Verstärker in anderen bekannten Architekturen zu realisieren. Der Verstärker kann auch in invertierender Konfiguration betrieben werden oder differentiell ausgeführt sein. Wie bereits erwähnt, kann die Regelung stufenweise oder stetig implementiert sein. Eine stufenweise Implementierung kann beispielsweise mit verschiedenen Widerständen und Schaltern realisiert werden, wobei durch Öffnen und Schließen der Schalter die Impedanz und damit die Verstärkung variiert wird. Die Schalter können in diesem Fall Transistoren sein. Alternativ ist es auch denkbar einen oder mehrere Transistoren parallel zu einem Widerstand zu schalten. Die Spannung am Steuereingang des Transistors wird genutzt, um den Kanalwiderstand des Transistors zu regeln, um so die Verstärkung des VGAs zu variieren.

Die Änderung der Verstärkung eines Systems, das heißt der Veränderungsvorgang an sich, kann wiederum zu nichtlinearen Verzerrungen führen, die ihrerseits zu einer Verringerung des CNR führen könnten. Um dieses Problem zu adressieren, gibt es eine Reihe von Ausführungsmöglichkeiten:

- Es ist im System bekannt, wann ein Datensignal (Datenpaket, Datenframe) übermittelt wird. Hierfür stellt der DSP 36 beispielsweise ein logisches Steuersignal bereit. Während des Sendens des Signals kann die Verstärkung nicht angepasst werden beziehungsweise die Verstärkung wird nicht verändert oder bleibt zumindest näherungsweise unverändert. Die Anpassung der Verstärkung erfolgt dann entsprechend zwischen den Paketen/Frames.
- Die Regelung erfolgt so schwach oder in kleinen Stufen/Änderungsraten, dass das Rauschen der nichtlinearen Verzerrungen in Folge der Verstärkungsanpassung klein gegenüber den anderen wirksamen Rauschquellen (beispielsweise Receiverrauschen) ist. Bei einer stufenweisen Anpassung müssen die Stufen sehr klein sein, was in den meisten Systemen impraktikabel sein kann. Bei einer stetigen Verstärkungsanpassung erfolgt die Änderung der Verstärkung hingegen sehr langsam, das heißt über ein großes Zeitintervall, das heißt über eine Vielzahl von Datenpakete/- frames hinweg. Während der Dauer eines Pakets kann damit die Verstärkung als konstant genähert werden.

Wie erwähnt, lässt sich die Aussteuerung des Signals 22 alternativ oder zusätzlich auch ganz oder teilweise durch den DSP 36 regeln. Während der Generierung des OFDM-Signals kann der DSP die Gesamtheit der Träger mit einer höheren Leistung beaufschlagen, wenn die Dämpfung im optischen Kanal besonders stark ist. Entsprechend kann er die Leistung pro Träger verringern, wenn die Kanaldämpfung besonders schwach ist. In diesem Fall verstärken sich nicht nur die nichtlinearen Verzerrungen am optischen Emitter 24, sondern auch am Digital-Analog-Konverter DAC des DSP 36. Entscheidend bleibt, dass das gesamte Rauschen aus nichtlinearen Verzerrungen gegenüber den anderen Rauschanteilen entsprechend geregelt wird.

Diese Funktionalität sollte nicht mit einem konventionellen, adaptiven Power-Loading verwechselt werden, wie es auch gelegentlich bei OFDM eingesetzt wird. Hierbei wird die Leistung pro Träger über dem Signalspektrum so variiert, dass die nicht ideale Übertragungsfunktion der Verbindung, beispielsweise eine Tiefpassdämpfung, kompensiert wird [e,f], wobei derartige Verzerrungen als lineare Verzerrungen bezeichnet werden. Im Unterschied dazu wird in der vorliegenden Erfindung der Effekt der Kanaldämpfung im Hinblick auf den Einfluss der nichtlinearen Verzerrungen kompensiert. Die Regelung erfolgt nicht erst, wenn das Signal sehr schwach ist, sondern auch schon bei sehr starkem Signal, da, wie etwa in Fig. 2a dargestellt, beispielsweise auch schon ab einer Entfernung ~1 Meter von einer stärken bzw. schwächeren Aussteuerung profitiert werden kann.

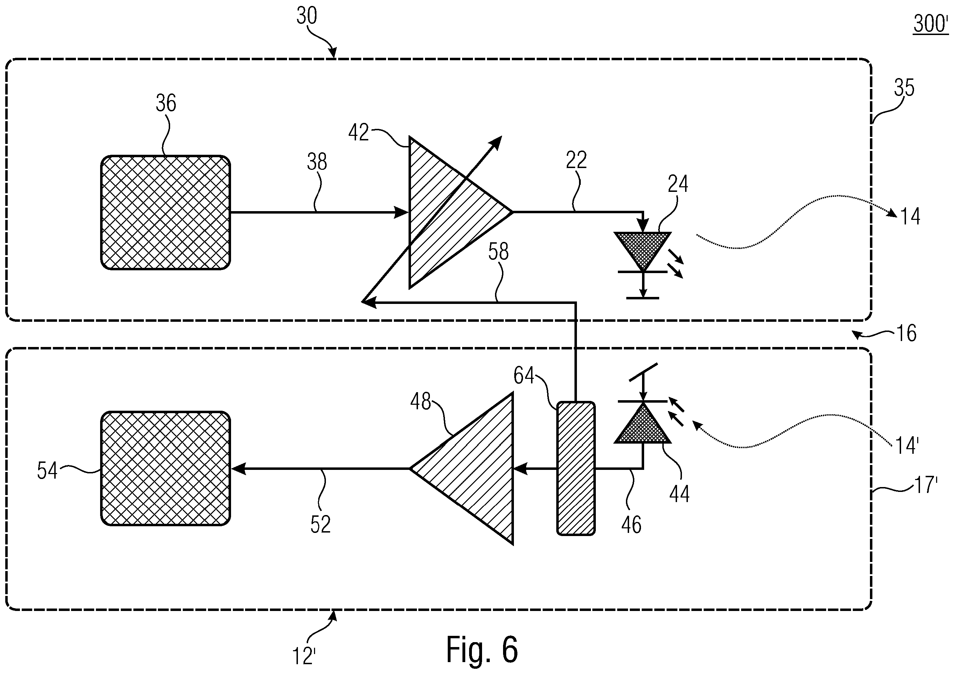

Alternativ zu einer Bestimmung des Ansteuersignals 58 an der optisch-drahtlosen Vorrichtung selbst, kann eine entsprechende Information auch von einem hierfür eingerichteten Empfänger 12' empfangen werden, wie es beispielsweise in Fig. 6 dargestellt ist, die ein schematisches Blockschaltbild eines optisch-drahtlosen Netzwerks 300' zeigt, das im Vergleich zum optisch-drahtlosen Netzwerk 300 aus Fig. 3 eine Rückkopplung des Empfängers 12' mit einem Receiver 17' an die Vorrichtung 30 ermöglicht. Hierzu kann der Empfänger 12' eine Messeinrichtung 64 umfassen, die beispielsweise ausgebildet ist, um das Empfangssignal 46 zu empfangen und auszuwerten, etwa im Hinblick auf die Empfangsleistung. Die Messeinrichtung 64 kann ausgebildet sein, um einen Gleichanteil des Photostroms des Empfangssignals 46 zu erfassen und diese Information oder eine hieraus abgeleitete Information, beispielsweise einen quantisierten Wert oder dergleichen, an die optisch-drahtlose Vorrichtung 30 zu übermitteln.

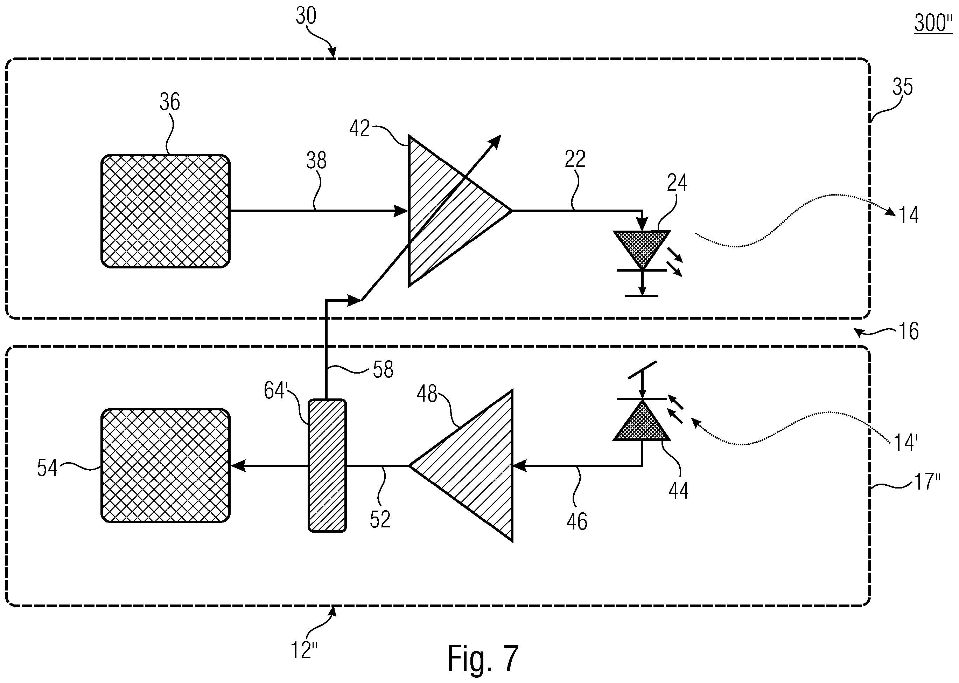

In Fig. 7 ist ein optisch-drahtloses Netzwerk 300" ähnlich zur Fig. 6 dargestellt, bei der eine Messeinrichtung 64' ausgebildet ist, um eine AC-Signalleistung, das bedeutet einen Wechselanteil, des Verstärkersignals 52 zu erfassen. Dieses Messergebnis kann alternativ oder zusätzlich zum Ergebnis der Messeinrichtung 64 zumindest einen Teil des Steuersignals 58 für die optisch-drahtlose Vorrichtung 30 bilden. Während im optisch-drahtlosen Netzwerk 300' die Kanalinformation auf einem Gleichanteil eines von dem Empfänger 12" des optisch-drahtlosen Kanals 16 empfangenen optisch-drahtlosen Signals 14' basiert und diese beispielsweise für eine Anpassung eines Dämpfungsglieds der elektronischen Signalquelle 42 assoziiert sein kann, beschreibt Fig. 7 eine Ausgestaltungsform, bei der die Kanalinformation auf einem Wechselanteil eines von dem Empfänger 12" des optisch-drahtlosen Kanals 16 empfangenen optisch-drahtlosen Signals 14' basiert und mit einer Anpassung eines Verstärkungsfaktors der elektronischen Signalquelle assoziiert ist. Beispielsweise kann der Empfänger 12' für die Einstellung des Receivers 35' genutzt werden und der Empfänger 12" für die Einstellung des Receivers 35".

In beiden Fällen wird ein Steuersignal für die variable Aussteuerung bereitgestellt. Manche der hierin beschriebenen Ausführungsbeispiele sehen für das Generieren des Steuersignals 58 die Verwendung einer Rechenregel vor. Diese kann zur Vorab-Bestimmung des Steuersignals 58, etwa zur Hinterlegung in einem Informations- oder Datenspeicher angewendet werden, alternativ oder zusätzlich, aber auch im laufenden Betrieb. Wie Formel (1) verdeutlicht, kann sich das CNR aus Signalleistung $P_{sig}$ zur Rauschleistung $P_n$ bilden. Signal- und Rauschleistung könnten durch die entsprechenden Effektivwerte der Spannungen ersetzt werden. In den nachfolgenden Betrachtungen sind die Spannungen dementsprechend als Effektivwerte zu verstehen. In dem hier beispielhaft beschriebenen Modell setzt sich das Rauschen aus den unabhängigen Rauschgrößen des internen Receiverrauschens $u_{n\,RX}$ und des Rauschens aus nichtlinearen Verzerrungen am Transmitter $u_{n\,nl\,TX}$ beziehungsweise Receiver $u_{n\,nl\,RX}$ zusammen. $u_{n\,nl\,Rx}$ ist je nach System üblicherweise gegenüber $u_{n\,RX}$ zu vernachlässigen, bis es zum Übersteuern im Receiver kommt. Eine geringere Transmitteraussteuerung verhindert das Auftreten von Übersteuern, beziehungsweise lässt dieses erst bei größeren Empfangspegeln auftreten, so dass sich die dynamische Reichweite des Links beziehungsweise der Datenverbindung auch zu geringen Distanzen hin vergrößert. Der Zusammenhang zwischen der Signalspannung $u_{sig}$ und der Transmitteraussteuerung ist näherungsweise linear, aber die Abhängigkeit von $u_{sig}$ zu $u_{n\,nl\,Tx}$ ist höchst nichtlinear. Exemplarisch sei hier die Triple-Beat-Verzerrung genannt, die mit dem Quadrat der Aussteuerung zunimmt. Dies erklärt, warum sich das CNR verbessern lässt, wenn sich die Aussteuerung reduziert.

$$CNR = \frac{P_{sig}}{P_n} = \frac{u_{sig}^2}{u_{n\,Rx}^2 + u_{n\,nl\,Tx}^2 + u_{n\,nl\,Rx}^2} \tag{1}$$

Gemäß einem Ausführungsbeispiel ist die optisch-drahtlose Vorrichtung für die Anpassung der Aussteuerung der optischen Signalquelle 14/24 eingerichtet und kann hierfür durch die Anpassung einen Rauschanteil infolge der nichtlinearen Verzerrung an einem Gesamtrauschen am Ort des Empfängers in einer Größenordnung mit einem internen Empfängerrauschen erhalten. In diesem Fall werden üblicherweise die höchsten Datenraten erreicht. Als Größenordnung wird hier verstanden, dass der Wert zumindest 1/3 und höchstens das 10-fache des anderen entspricht, das bedeutet, der Rauschanteil der nichtlinearen Verzerrung an dem Gesamtrauschen am Ort des Empfängers beträgt zumindest 33% und höchstens 1000% des internen Empfängerrauschens.

In anderen Worten kann gemäß einem Ausführungsbeispielen eine Steuerungseinrichtung der optisch-drahtlosen Vorrichtung und/oder des Prozessors 36 implementierte Regelung kann so ausgelegt werden, dass die Aussteuerung des Signals 24 so geregelt wird, dass das Rauschen aus den nichtlinearen Verzerrungen $u_{n\,nl\,Tx}$ nicht das CNR und damit auch nicht die Datenrate reduziert. Praktisch bedeutet das, dass $u_{n\,nl\,Tx}$ in der Größenordnung des Receiverrauschens $u_{n\,Rx}$ liegen sollte, was beispielsweise eine Regelungsgröße darstellen kann. Gleichzeitig ist in manchen Ausführungen vorgesehen, die Aussteuerung nicht zu gering zu wählen, um zu vermeiden, dass eine zu geringe

EP 4 057 525 B1

Signalspannung $u_{sig}$ ebenfalls das CNR begrenzt, welches sich in diesem Fall nur aus $u_{sig}$ und $u_{nRX}$ bildet. Praktisch sollte $u_{nnlTx}$ in etwa so groß wie die dominante Rauschquelle, das heißt $u_{nRX}$ beziehungsweise $u_{nnlRx}$ sein. In diesem Fall erhöht $u_{nnlTx}$ beispielsweise die Rauschleistung um $\sqrt{2}$. Eine weitere Reduktion reduziert die Aussteuerung $u_{sig}$ aber in einem höheren Maße als die Rauschleistung. Grundsätzliches Ziel der variablen Transmitteraussteuerung ist es, bei einem bestimmten Empfangspegel in einer bestimmten Entfernung das CNR zu maximieren.

Das Steuersignal 58, welches die Aussteuerung für die Transmittersteuerung kann beispielsweise wie folgt ermittelt werden:

- Es kann am eigenen Receiver erzeugt werden, unter der Annahme, dass das Signal am Receiver des Kommunikationspartners ähnlich ist.

    ◦ Fig. 6: Messung der DC-Empfangsleistung am Block 64 vor oder nach dem Photodetektor 44. Im Falle einer Photodiode bedeutet dies eine Messung des Gleichanteils des Photostroms an der Anode oder Kathode der Photodiode. Dieses Signal wird verstärkt und zum Treiber 42 geführt.

    ◦ Fig. 7: Messung der AC-Signalleistung am Block 64' nach dem Transimpedanzverstärker 48 kann das Signal 52 abgegriffen werden und der AC-Anteil bestimmt werden (beispielsweise Bestimmung des RMS-Wertes). Diese Spannung wird entsprechend verstärkt und zum Treiber 42 geführt.

- Am Receiver 12'/12" des Kommunikationspartners: Systeme mit Bit-Loading verfügen über eine Funktion die Fehlerrate des Systems beziehungsweise das CNR auszuwerten, um das Bit-Loading entsprechend anpassen zu können. Diese Informationen und das aktuelle Bit-Loading können dem Kommunikationspartner protokollseitig durch Übermitteln einer entsprechenden Nachricht im selben oder einem anderen Wellenlängenbereich oder Frequenzbereich mitgeteilt werden. Alternativ kann protokollseitig auch direkt mitgeteilt werden, ob die Aussteuerung erhöht oder verringert werden soll.
- Die optisch-drahtlose Vorrichtung kann über einen weiteren optischen Detektor verfügen, der ebenfalls das Signal detektiert. Dieser Empfänger kann einen großen Photodetektor nutzen. Das Signal kann bei geringer Bandbreite besonders rauscharm verstärkt werden, um ein Maß für den Gleichanteil des Signals 14' zu erzeugen.
- Die optisch-drahtlose Vorrichtung könnte über einen Entfernungsmesser verfügen, wie bspw. einen time-of-flight sensor. Aus der Entfernung kann auf die Kanaldämpfung zurückgeschlossen werden.
- In einer bi-direktionalen optisch-drahtlosen Vorrichtung kann das Steuersignal im DSP 54 generiert mittels digitaler Datenverarbeitung aus dem Signal 52. Mittels Bestimmung der harmonischen Verzerrung, Intermodulationsprodukte, oder andere Informationen über nichtlineare Verzerrungen, welche aus dem Signal oder einem Test-Signal extrahiert werden, kann die Transmitteraussteuerung des gegenüberliegenden Geräts ermittelt werden. So kann auf die Kanaldämpfung und die Kanalverzerrung berechnet werden, indem die Kanalverzerrung mit einer systemspezifischen Sendeleistung assoziiert wird. Es versteht sich von selbst, dass die beschriebene Funktionalität des DSP auch analog in den Receiver implementiert werden könnte.

Der Zusammenhang zwischen Messgröße im Empfänger und der Änderung der Verstärkung im Transmitter kann linear oder nichtlinear sein, wobei eine nichtlineare Regelung eine größere dynamische Reichweite der Reglung erlaubt.

Fig. 6 zeigt einen optisch-drahtlosen Transceiver mit variabler Treiberverstärkung, wobei die Verstärkung durch ein Steuersignal aus dem Receiver geregelt wird, welches beispielhaft durch eine Messung des Gleichanteils des Photostroms generiert wird.

Fig. 7 zeigt einen optisch-drahtlosen Transceiver mit variabler Treiberverstärkung, wobei die Verstärkung durch ein Steuersignal aus dem Receiver geregelt wird, welches nach dem Verstärker 48 aus dem Signal 52 generiert wird.

Alternativ oder zusätzlich zum Ändern des Betriebszustandes der elektronischen Signalquelle, etwa durch Anpassen der Signalamplitude im Signalprozessor 36 und/oder durch Anpassen der Verstärkung in der Treiberschaltung 42, kann ebenso für die Anpassung der nichtlinearen Kanalverzerrung eine Anpassung eines Arbeitspunktes der optischen Signalquelle 24 erfolgen.

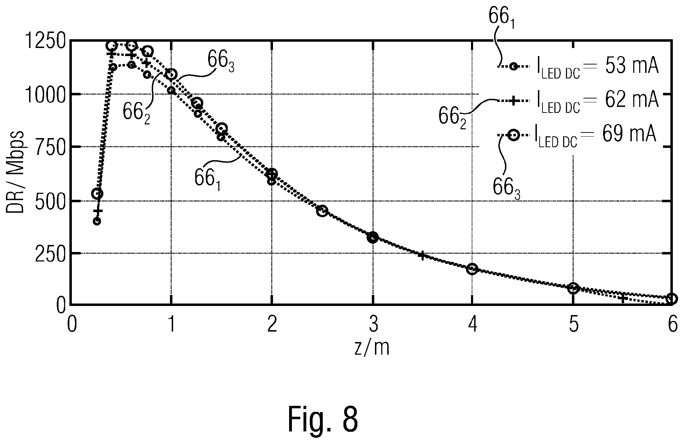

Fig. 8 zeigt eine beispielhafte Gegenüberstellung erzielbarer Datenraten, $DR$, gegenüber einem an der Abszisse angetragenen Abstand z. Kurven $66_1$, $66_2$ und $66_3$ zeigen dabei unterschiedliche Arbeitsströme $I_{LED\,DC}$ für die optische Signalquelle 24. Dabei ist erkennbar, dass bei geringen Abständen, beispielsweise bis hin zu einem Meter, ein höherer Strom mit einer höheren Datenrate einhergeht, dass sich dieser Effekt aber bereits in eine Art von Sättigung begibt, sobald der Abstand einen Meter überschreitet, indem die Kurven $66_2$ und $66_3$ sich annähern und ab einem Abstand von größer 1,5 Metern sich annähernd überdecken. Dahingegen kann bei größeren Abständen von beispielsweise mehr als 5 Metern mit einem hohen Arbeitsstrom (Kurve $66_3$) als auch mit einem geringen Arbeitsstrom (Kurve $66_1$) eine höhere Datenrate erreicht werden als mit einem mittleren Arbeitsstrom (Kurve $66_2$).

Mit anderen Worten zeigt Fig. 8 eine Datenrate über Entfernungen für verschiedene LED-Arbeitspunkte.

Als Arbeitspunkt kann beispielsweise der angelegte zeitlich gemittelte Betriebsstrom oder Arbeitsstrom eingestellt werden. Alternativ oder zusätzlich zum Einrichten eines Informationsspeichers mit unterschiedlichen Werten für die Aussteuerung kann ein Informationsspeicher oder derselbe Informationsspeicher mit unterschiedlichen vordefinierten Werten für den Arbeitspunkt eingerichtet sein, die mit unterschiedlichen Werten der Kanalverzerrung assoziiert sind. Eine derartige optisch-drahtlose Vorrichtung kann ausgebildet sein, um aus dem Informationsspeicher unter Verwendung der Kanalinformation einen einzustellenden Wert für den Arbeitspunkt zu erhalten und anzuwenden.

Eine optisch-drahtlose Vorrichtung, die eingerichtet ist, um den Arbeitspunkt der optischen Signalquelle 24 anzupassen, kann ausgebildet sein, um bei einem dominanten oder relevanten Anteil der nichtlinearen Verzerrung an einem Gesamtrauschen und bei gleichzeitig hohem Rauschabstand des optisch-drahtlosen Signals an einem Empfänger des optisch-drahtlosen Signals und einer gleichzeitig hohen Datenrate in dem optisch-drahtlosen Signal den Arbeitspunkt zu erhöhen. Unter Verweis auf Fig. 8 ist dies beispielsweise dort bei geringen Entfernungen von weniger als einem Meter der Fall. Alternativ oder zusätzlich kann eine derartige Vorrichtung eingerichtet sein, um bei einem wenig relevanten Anteil der nicht-linearen Verzerrungen an dem Gesamtrauschen und einer schwachen Signalleistung des optisch-drahtlosen Signals an einem Empfänger den Arbeitspunkt zu verringern. Ein solches Vorgehen erlaubt eine erhebliche Reduktion der Leistungsaufnahme des Transmitters. Je nach Transceiveranordnung um bis zu 10 %, 30 % oder gar mehr als 50 %. Der Anteil der nichtlinearen Verzerrung ist bspw. nicht relevant, wenn die Datenrate in Folge der Anpassung des Arbeitspunkts durch die nichtlinearen Verzerrungen weniger als 5 % reduziert wird.

Wie im Zusammenhang mit der Anpassung der Aussteuerung erläutert, kann eine derartige Bestimmung dadurch erfolgen, indem eine entsprechende Information von dem Empfänger erhalten wird oder indem eine entsprechende Bestimmung am Ort des Senders, das heißt der optisch-drahtlosen Vorrichtung, erfolgt.

In anderen Worten kann alternativ oder zusätzlich zu einer Anpassung der Aussteuerung des Emitters der Transmitter von einer variablen Arbeitspunkteinstellung des optischen Emitters profitieren (also mit und ohne variable Transmitteraussteuerung). Der Emitter-Arbeitspunkt nimmt Einfluss auf die Effizienz, die Bandbreite und die Linearität des Emitters. Ein relevanter oder gar entscheidender Aspekt für die OFDM-Datenübertragung ist, dass die Linearität wesentlich Einfluss auf die maximale Datenrate nimmt, aber weniger Einfluss, sobald das Receiverrauschen $u_{n\,RX}$ dominiert. In diesem Bereich beeinflusst der Arbeitspunkt die Datenrate nur über die Abhängigkeit der Bandbreite und Effizienz. Dieser Einfluss ist in der Regel deutlich schwächer. Die Messung in Fig. 8 zeigt diese Zusammenhänge an Datenraten-Kurven über der Entfernung für verschiedene LED-Arbeitspunktströme bei jeweils gleicher Transmitteraussteuerung.

Wie bei der variablen Transmitteraussteuerung kann dieses Verhalten durch einen adaptiven Transmitter ausgenutzt werden. Ist das CNR (und die Datenrate) hoch, wird dieses üblicherweise durch die nichtlinearen Verzerrungen begrenzt. In diesem Fall wird der Arbeitspunkt beispielsweise erhöht, um die Verzerrungen zu reduzieren. Damit wird eine höhere, maximale Datenrate erreicht. Ist das Empfangssignal aufgrund höherer Kommunikationsdistanz allerdings schwächer, wird der Arbeitspunkt reduziert. Dies reduziert in Fig. 8 für die drei Arbeitsströme bei z=3m die Datenrate nicht. Allerdings reduziert dies bei diesem Beispiel die Stromaufnahme um etwa 25%. Da der Transmitter ein wesentlicher Verbraucher im Transceiver ist, reduziert dies zum einen die Leistungsaufnahme des Gesamtsystems zum anderen reduziert sich die thermische Belastung und erhöht damit die Lebensdauer.

Das Steuersignal für eine solche Regelung kann analog zur variablen Transmitteraussteuerung im Receiver des eigenen Transceivers oder im DSP des Kommunikationspartners erzeugt werden. Der Arbeitspunkt kann direkt vom Verstärker 42 eingestellt, oder bspw. über einen Bias-Tee oder eine AC-Kopplung eingeprägt werden. Der Arbeitspunkt wird dann entsprechend durch Anpassung der Komponenten variiert. Bei einem diskreten Verstärker 42 kann dies durch Anpassung der Gleichtaktspannung durch die Steuerspannung 58 erfolgen. Beim Bias-Tee wird gemäß Ausführungsbeispielen ebenfalls direkt die Steuerspannung 58 angelegt. Bei einer AC-Kopplung kann der Gleichanteil beispielsweise über ein Teilerverhältnis eines Spannungsteilers angepasst werden, indem zumindest eine der Impedanzen regelbar ausgelegt wird. Auch die digitale Programmierung des Verstärkers 42 für ein variables Ausgangslevel ist denkbar.

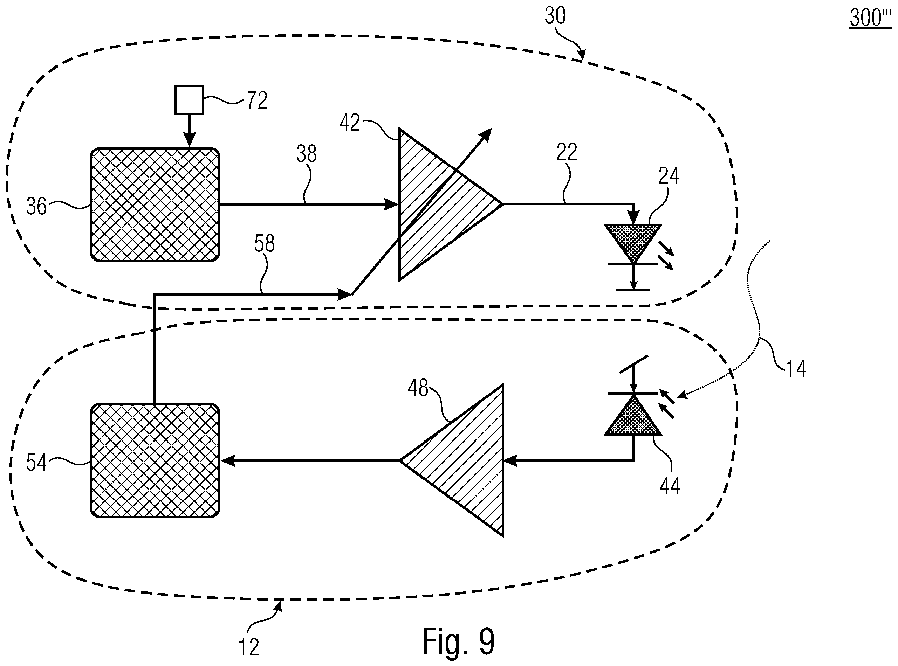

Fig. 9 zeigt ein schematisches Blockschaltbild eines optisch-drahtlosen Netzwerks 300‴, bei dem empfängerseitig die Prozessoreinrichtung 54 eingerichtet ist, um das Steuersignal 58 für die Einstellung der Treiberschaltung 42 bereitzustellen. Alternativ oder zusätzlich kann das Signal 58 auch eingesetzt werden, um den Arbeitspunkt der optischen Signalquelle 24 einzustellen. Das bedeutet, anders als im Zusammenhang mit den Fig. 6 und 7 beschrieben, kann das Steuersignal 58 auch durch die Prozessoreinrichtung 54 bereitgestellt werden. Abweichend von der Darstellung der Fig. 9 kann das Steuersignal 58 auch direkt der Prozesseinrichtung 36 bereitgestellt werden, die die entsprechenden Anweisungen umsetzt oder die zu erzeugenden Steuerungsbefehle hieraus ableitet.

Fig. 9 zeigt ferner einen Informationsspeicher 72, in welchem alternativ oder zusätzlich zum Steuerungssignal 58 Vorgaben für die Steuerung der Treiberschaltung 42 und/oder die optische Signalquelle 24 gespeichert sein können. Diese Informationen können beispielsweise genutzt werden, um das Steuersignal 58 zu interpretieren, beispielsweise wenn es von dem Signalprozessor 36 empfangen wird.

Der Informationsspeicher 72 kann unterschiedliche vordefinierte Werte für den Arbeitspunkt und/oder die Aussteuerung aufweisen, die mit unterschiedlichen Werten der Kanalverzerrung assoziiert sind und hinterlegt sind. Die optisch-drahtlose Vorrichtung kann ausgebildet sein, um aus dem Informationsspeicher 72 unter Verwendung der Kanalinformation, etwa des Steuersignals 58, einen einzustellenden Wert für den Arbeitspunkt zu erhalten und anzuwenden.

Mit anderen Worten zeigt Fig. 9 ein schematisches Blockdiagram eines optisch-drahtlosen Netzwerks 300''' bei dem das Steuersignal 58 von einem Block 54 aus einer Empfängerkette des optisch-drahtlosen Signals 14 erstellt wird. Alternativ kann das Steuersignal auch basierend auf einem Empfang am Transceiver erfolgen, also entlang der entgegengesetzten Richtung und/oder für andere Signale, beispielsweise Referenzsignale oder Pilotsignale.

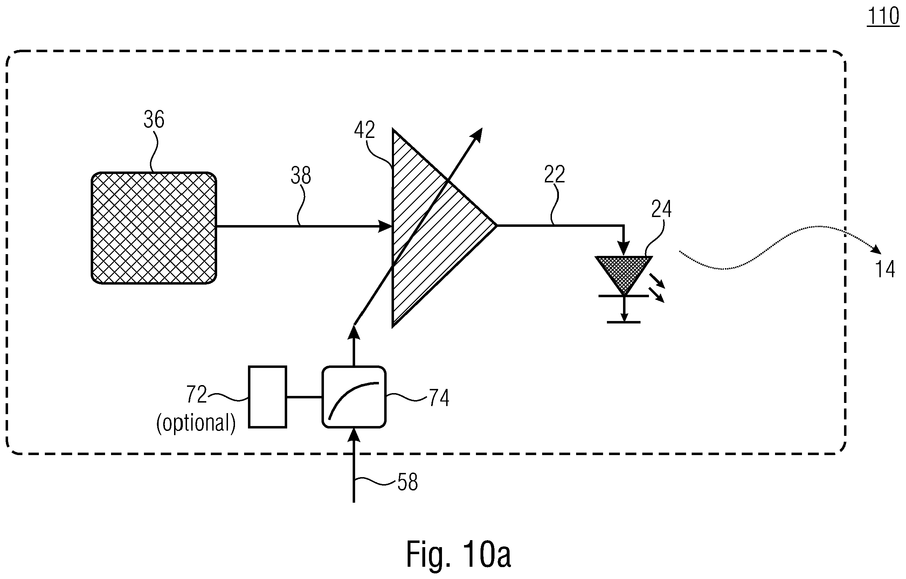

Fig. 10a zeigt ein schematisches Blockschaltbild eines Teils einer optisch-drahtlosen Vorrichtung 110 gemäß einem Ausführungsbeispiel. Diese ist beispielhaft zur Anpassung der Aussteuerung der optischen Signalquelle durch Ändern des Betriebszustandes der elektronischen Signalquelle eingerichtet und empfängt hierfür beispielhaft das Steuersignal 58, wie es beispielsweise im Zusammenhang mit den Fig. 4, 5, 6, 7 oder 10 beschrieben ist. Die optisch-drahtlose Vorrichtung 10 kann ein Regelungselement 74 umfassen, das beispielsweise alternativ oder zusätzlich zu der Dämpfungsschaltung 56 oder 56' in den Fig. 4 oder 5 eingesetzt werden kann. Aus dem Steuersignal 58 kann somit eine Ansteuerung für die Treiberschaltung 42 abgeleitet werden. In anderen Worten zeigt Fig. 10a ein schematisches Blockschaltbild einer optisch-drahtlosen Vorrichtung zur Anpassung einer Verstärkung des Treibers 42, um die Aussteuerung der optischen Signalquelle zu beeinflussen.

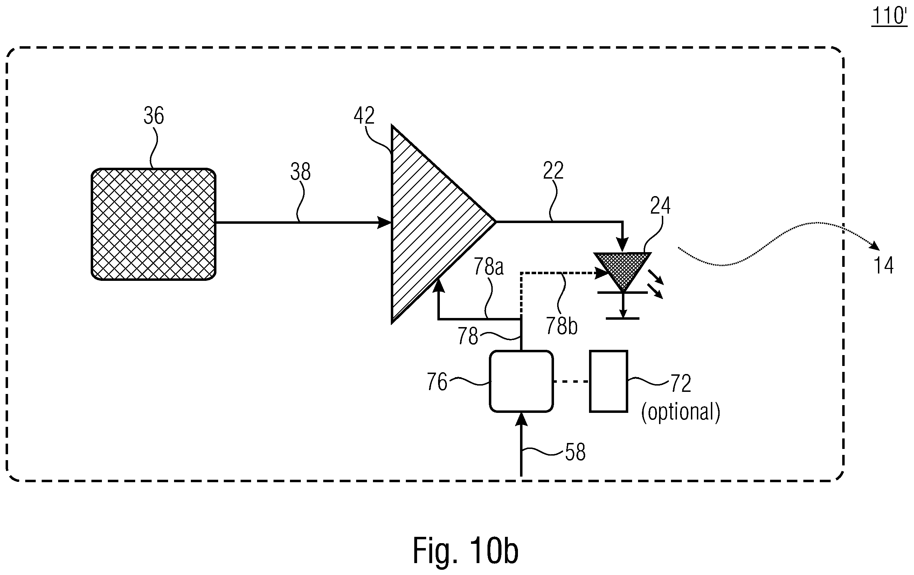

Fig. 10b zeigt ein schematisches Blockschaltbild einer weiteren optisch-drahtlosen Vorrichtung 110' gemäß einem Ausführungsbeispiel, die ein Regelungselement 76 zum Empfang des Steuersignals 58 aufweist. Ein hieraus erhaltenes Steuerungssignal 78 kann von der optisch-drahtlosen Vorrichtung 110 genutzt werden, um die optische Signalquelle 24 und/oder die elektronische Signalquelle, das heißt, den Signalprozessor 36 und/oder die Treiberschaltung 42 zu steuern.

In anderen Worten zeigt Fig. 10b ein schematisches Blockschaltbild einer optisch-drahtlosen Vorrichtung zur Anpassung eines Arbeitspunktes der optischen Signalquelle 24. Der Emitter kann dabei über einen DC-Anteil des Verstärkers 42 eingestellt werden (Signal 78a) und/oder über ein Steuersignal an den Emitter 24 selbst, Steuersignal 78b. Die Signale 78a und 78b können gleich im Hinblick auf Amplitude, Frequenz oder dergleichen sein, können sich aber auch voneinander unterscheiden .

Das Verhalten der Regelungseinrichtungen 74 und/oder 76 kann linear oder nichtlinear sein, ist aber bevorzugt nichtlinear. Optional können die Regelungseinrichtungen 74 und/oder 76 mit dem Informationsspeicher 72 gekoppelt sein. Darin kann definiert werden, bei welchem Steuersignal 58 beziehungsweise welcher Amplitude, Frequenz oder anderer Eigenschaft, welche Verstärkung oder Eigenschaft in der elektronischen Signalquelle oder der optischen Signalquelle eingestellt wird. In anderen Worten können manche Eigenschaften hierin beschriebener Ausführungsbeispiele auch beschrieben werden als:

- Steuersignal 58:

    - weist eine bekannte Abhängigkeit von der Kanaldämpfung auf und kann deshalb genutzt werden, um auf die Kanaldämpfung zu schließen,

    - stammt beispielsweise aus dem Receiver (Gleich/Wechselanteil, vor oder nach dem Receiververstärker; oder aus dem Receiver DSP als PSD (Power Spectral Density; spektrale Leistungsdichte); oder als Datenpaket des gegenüberliegenden Transceivers), oder von einer Entfernungsmessung (Beispielsweise Beacon, o. ä.)

- Regelungselement 74 (dieses ist beispielsweise die Einrichtung 56 oder 56'):

    - definiert, inwiefern eine Änderung des Steuersignals 58 zur Änderung der Verstärkung führt;

    - Übertragungsfunktion ist nichtlinear, da versucht wird über die Änderung der Aussteuerung das CNR zu maximieren und um eine möglichst große dynamische Reichweite der Regelung zu ermöglichen

    - Verhalten:

        - Es kann eine Look-Up-Tabelle hinterlegt sein, welche definiert, bei welchem Steuersignal welche Verstärkung eingestellt wird.

        - Die Verstärkung kann alternativ iterativ optimiert werden: ändert sich das Steuersignal um einen bestimmten Wert, wird beispielsweise die Verstärkung erhöht; hat sich dadurch das CNR/Datenrate im DSP verschlechtert, erfolgt nun die entgegengesetzte Anpassung; dies wird so lange wiederholt, bis keine Verbesserung mehr erzielt werden kann

- Alternativ oder zusätzlich: Das Regelungselement 76 für die Änderung des Arbeitspunktstroms wird vom selben Steuersignal 58 angesteuert, regelt aber anders als das Regelungselement 74 den Arbeitspunkt des optischen Emitters. Das Signal 58 der Fig. 10b kann das identische Signal sein wie in Fig. 10a, etwa wenn das Element 74 und 76 unterschiedliche Aktionen aus diesem Signal ableiten (oder es kann sich um zwei individuelle und möglicherweise auf das Element 74 beziehungsweise 76. angepasste Signale handeln). Das Einstellen der Aussteuerung im DSP und/oder im Verstärkerelement einerseits und die Anpassung des Arbeitspunktes des Emitters im DSP und/oder durch das Element 76 kann gemeinsam aber auch unabhängig voneinander erfolgen.

Die Funktionen in den Elementen 74 und/oder 76 können dabei linear oder, bevorzugt und wie in Fig. 10a und Fig. 10b dargestellt, nichtlinear sein.

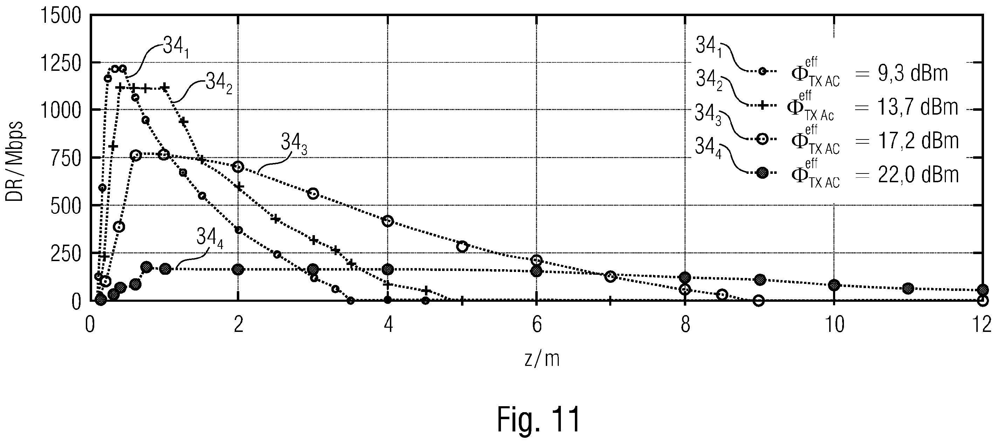

Fig. 11 zeigt erneut die Kurven $34_1$, $34_2$, $34_3$ und $34_4$ aus Fig. 2a.

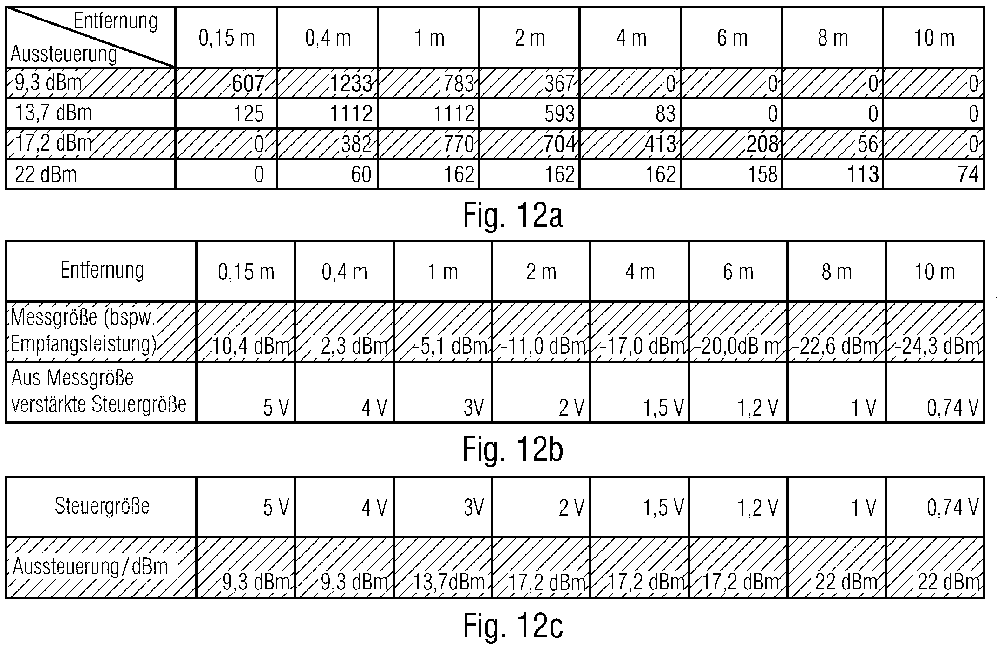

Die Fig. 12a, 12b und 12c zeigen jeweils eine beispielhafte Tabelle, wobei die Tabellen der Fig. 12a bis 12c untereinander durch die jeweiligen Eigenschaften verknüpft sind. So zeigen die Tabellen der Fig. 12a und 12b übereinstimmende Entfernungen zwischen einem optisch-drahtlosen Sender und korrespondierendem Empfänger, wobei die Tabelle der Fig. 12a in den Zeilen die unterschiedlichen Aussteuerungen der Fig. 2a und Fig. 11 zeigt. In der Tabelle der Fig. 12b ist hierzu zugehörig zum jeweiligen Abstand beziehungsweise der zugehörigen Entfernung eine Messgröße dargestellt sowie eine aus dieser Messgröße verstärkte Steuergröße, die beispielsweise als Steuersignal 58 dienen kann, beziehungsweise als Grundlage hiervon. In der Fig. 12c ist beispielhaft dargestellt, welche Aussteuerung der elektronischen Signalquelle mit der jeweiligen Messgröße der Tabelle aus Fig. 12b assoziiert werden kann, wobei hierzu die Werte beispielsweise in die unterschiedlichen Aussteuerungen der Tabelle in der Fig. 12a quantisiert sind. Das bedeutet, aus der Fig. 12b kann für unterschiedliche Abstände erhalten werden, bei welcher Messgröße die jeweilige Datenrate maximiert werden kann, die in den Feldern der Tabelle der Fig. 12a beschrieben ist.

Anders ausgedrückt zeigt die Tabelle der Fig. 12a im Zusammenhang mit der beispielhaften Ansteuerung für Fig. 2a beziehungsweise Fig. 11 und den darin dargestellten Datenraten, für die gemäß Fig. 2a die Hüllkurve erstellt wird, exemplarisch ein beispielhaftes Messergebnis eines Werts für eine Datenrate *DR* in Mbps. Bei jedem Abstand/Entfernung zwischen Sender/Transmitter und Empfänger/Receiver wurden unterschiedliche Aussteuerungen des optischen Emitters eingestellt. Die Maximalwerte einer Spalte können für die jeweilige, mit der Kanaldämpfung assoziierte Entfernung, als zu wählende Aussteuerung verstanden werden. Wie es an den hervorgehobenen Ziffern erkennbar ist, ist für den Abstand von 0,15 Metern die Aussteuerung 9,3 dBm mit der höchsten Datenrate behaftet, ebenso wie für den Abstand 0,4 Meter. Die Aussteuerung 13,7 dBm liefert beim Abstand von einem Meter die besten Ergebnisse, während die Aussteuerung von 17,2 dBm für die Abstände 2 Meter, 4 Meter und 6 Meter die besten Ergebnisse der Datenrate liefert. Die Aussteuerung von 22 dBm ist bei höheren Abständen von 8 Metern und 10 Metern zielführend.

Die Tabelle der Fig. 12b zeigt einen Zusammenhang mit der beispielhaften Ansteuerung aus Fig. 2a beziehungsweise Fig. 11 und den darin dargestellten Datenraten sowie Werte einer Messgröße, etwa einer Empfangsleistung der aus Fig. 12a zugrundeliegenden optisch-drahtlosen Signale. Die unterschiedlichen Messgrößen können in eine Steuergröße überführt werden, dessen Schrittweiten an die Hardware des Sender und/oder Empfängers angepasst werden kann und in der Zeile "Aus Messgröße verstärkte Steuergröße" dargestellt ist und beispielsweise eine Grundlage für das Steuersignal 58 bilden kann. Ein sich hieraus ergebender funktioneller Zusammenhang zwischen den Messgrößen und der Steuergröße ist beispielhaft nichtlinear, ebenso wie zwischen Steuergröße und Aussteuerung und/oder Arbeitspunkt.

Die Tabelle aus Fig. 12c zeigt einen Zusammenhang mit der beispielhaften Ansteuerung aus Fig. 2a beziehungsweise Fig. 11 und den darin dargestellten Datenraten sowie ein Ergebnis der Korrelation aus den Tabellen der Fig. 12a und 12b. Ein Wert, der beispielsweise eine Steuergröße aus Fig. 12b anzeigt, kann mit einer Aussteuerung aus Fig. 2a und/oder Fig. 11 beziehungsweise der Tabelle aus Fig. 12a assoziiert sein, wobei das Signal 58 beispielsweise ein Spannungslevel ist. Alternativ oder zusätzlich kann der angezeigte Wert im Rahmen einer Codierung oder eines Bitmusters als anzulegende Größe an ein Bauelement übermittelt werden, damit dieses den Zustand ändert.

Die Lehre der Fig. 12a, 12b und 12c sind übereinstimmend gültig für das Ändern des Betriebszustandes der elektronischen Datenquelle zur Anpassung der Aussteuerung der optischen Signalquelle und für die Anpassung des Arbeitspunktes der optischen Signalquelle.

Fig. 2a, Fig. 11 sowie die Tabellen der Fig. 12a-c zeigen:

- DR oder CNR über Entfernung messen für verschiedene Transmitteraussteuerungen,
- für jede Entfernung das Maximum aller Kurven ermitteln,
- Zusammenhang zwischen Steuergröße 58 und Entfernung herstellen.
- Aussteuerung bzw. Arbeitspunkt entsprechend der Steuergröße 58 regeln

Das Steuersignal kann beispielsweise als Grundlage zum Ansteuern des Elements 56, 56' aus Fig. 4 und/oder Fig. 5 und/oder als Grundlage zum Einstellen des Regelungselements 74 aus Fig. 10a genutzt werden.

In ähnlicher Weise kann aus den jeweiligen Maximalwerten der Datenrate aus Fig. 8 ein Ansteuerstrom bestimmt werden, der bei einer jeweiligen Kanaldämpfung, beispielsweise durch Ermitteln der Entfernung zwischen Sender und Empfänger, einzustellen ist.

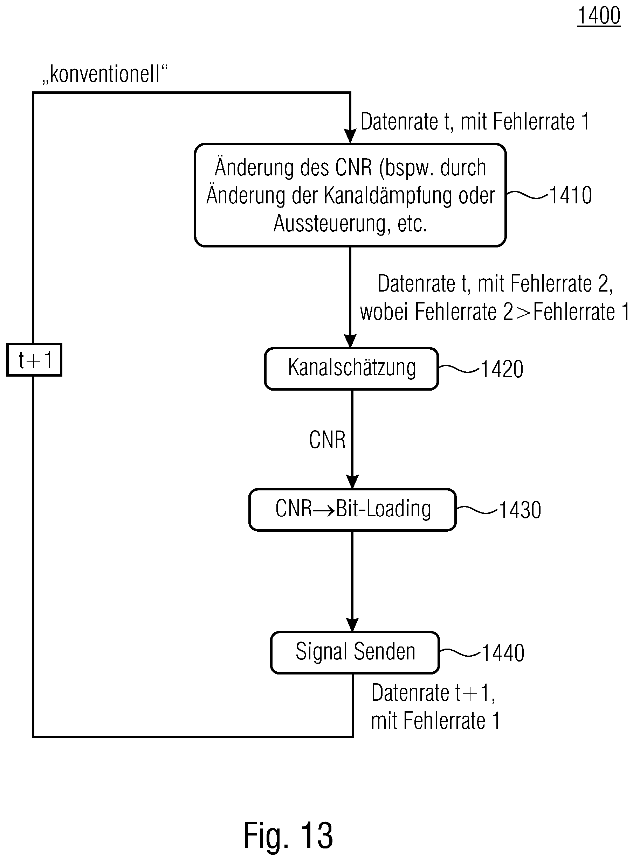

Fig. 13 zeigt ein schematisches Flussdiagramm eines bekannten Verfahrens 1400, bei dem ein Ergebnis der Kanalschätzung 1420 zu einer veränderten Bitrate des Datensignals, dem Bit-Loading, führt, wenn das Träger-zu-Rausch-Verhältnis verändert ist (Schritt 1410). Die Veränderung wird in einem Schritt 1430 implementiert und führt zu einem Senden 1440, bevor in einem weiteren Iterationsdurchlauf eine erneute Überprüfung durchgeführt wird. Dabei kodiert t den aktuellen Zeitabschnitt bzw. den aktuellen Takt und t+1 den darauffolgenden Zeitabschnitt bzw. Takt.

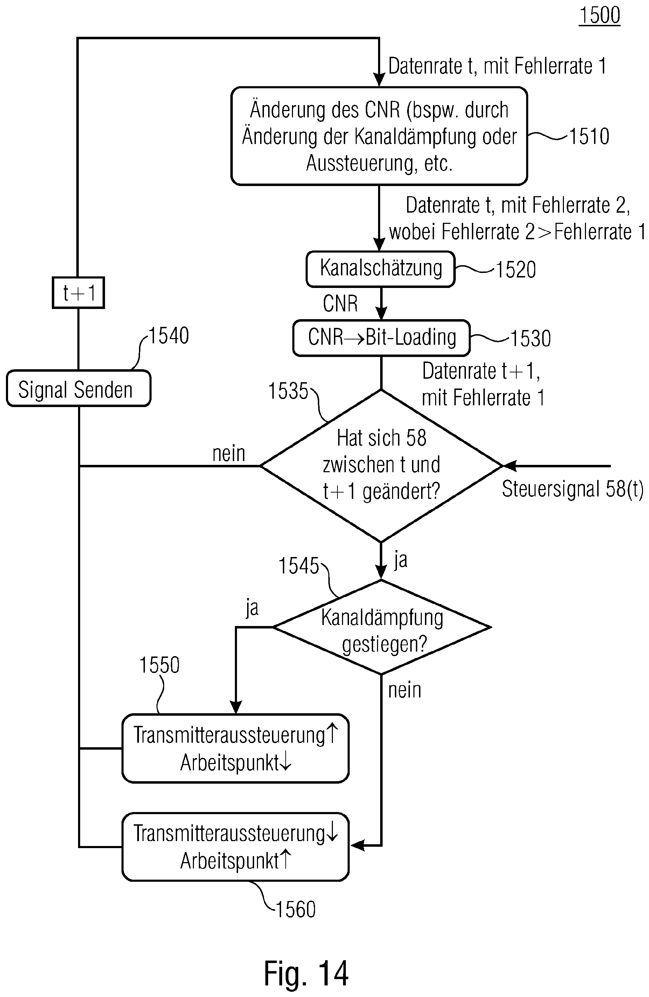

Fig. 14 zeigt ein schematisches Flussdiagramm eines Verfahrens 1500 gemäß einem Ausführungsbeispiel. In einem Iterationsdurchlauf ändert sich beispielsweise das Träger-zu-Rausch-Verhältnis, etwa durch eine Änderung der Kanaldämpfung oder der Aussteuerung( Schritt 1510). Dies geht mit einer Datenrate zum Zeitpunkt t sowie mit einer ersten Fehlerrate 1 einher. Hierdurch ist bei gleicher Datenrate bei t eine zweite Fehlerrate 2 präsent, die größer ist als die Fehlerrate 1. Eine Kanalschätzung 1520 kann den CNR liefern und eine veränderte Datenrate für ein Zeitintervall p+1 bewirken. Das Verfahren 1500 kann eine Entscheidung umfassen, ob sich ein Steuersignal 58 zwischen dem vorhergehenden Durchlauf t und dem aktuellen Durchlauf t+1 geändert hat. Ist dies nicht der Fall, so kann das Signal gesendet werden, Schritt 1540, der abgesehen von der Entscheidung 1535 zum konventionellen Verfahren 1400 führen kann. Hat sich allerdings das Steuersignal 58 geändert (Pfad "ja" bei Entscheidung 1535) so kann in einer Entscheidung 1545 bestimmt werden, ob die Kanaldämpfung gestiegen ist. Ist das Ergebnis "ja", so kann die Transmitteraussteuerung erhöht werden und/oder der Arbeitspunkt der optischen Signalquelle verringert werden, Schritt 1550. Liefert die Entscheidung 1545 das Ergebnis "nein", so kann die Transmitteraussteuerung verringert werden und/oder der Arbeitspunkt der optischen Signalquelle erhöht werden, Schritt 1560.

In anderen Worten zeigt Fig. 14 ein schematisches Flussdiagram eines Verfahrens gemäß einem Ausführungsbeispiel, bei dem überprüft wird, ob sich ein Kanaldämpfung anzeigendes Steuersignal (angezeigt durch das Steuersignal 58) zwischen zwei Sendeintervallen t; t+1 geändert hat. Falls ja, erfolgt eine Auswertung, ob die Kanaldämpfung gestiegen ist oder nicht, das heißt, ob sie gesunken ist. Falls die Dämpfung gestiegen ist, kann eine Transmitterausteuerung erhöht werden und/oder der Arbeitspunkt reduziert werden, das heißt, beispielsweise ein geringer Arbeitspunktstrom. Andernfalls kann die Transmitteraussteuerung reduziert und/oder der Arbeitspunkt erhöht werden. Dieses Verfahren kann so ausgeführt werden, dass beispielsweise der DSP 36 eine Anpassung des Signalsendens abhängig von den erhaltenen Ergebnissen umsetzen kann, etwa durch eine Anpassung der digitalen Signalverarbeitung. Beispielsweise kann dies durch die Änderung der Aussteuerung am analog-digital-Wandler des DSP selbst erfolgen, wie beschrieben und/oder der DSP kann den Arbeitspunkt des Emitters einstellen.

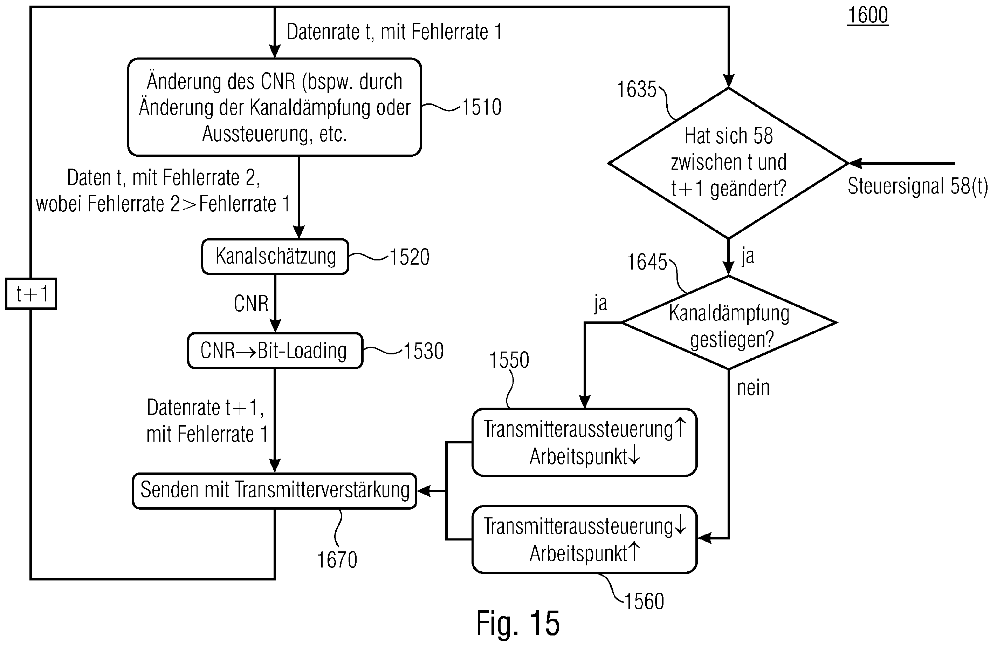

Fig. 15 zeigt ein schematisches Blockschaltbild eines weiteren Verfahrens 1600 gemäß einem Ausführungsbeispiel. Die Schritte 1510, 1520 und 1530 können in übereinstimmender Reihenfolge zum Verfahren 1500 implementiert werden. Anders kann jedoch gleich zu Beginn einer neuen Iterationsschleife parallel zu diesen Schritten korrespondierend zur Entscheidung 1535 eine Entscheidung 1635 ausgeführt werden, ob sich das Steuersignal 58 zwischen dem vorangehenden Zeitintervall t und dem aktuellen Zeitintervall t+1 geändert hat. Ist dies der Fall, kann überprüft werden, ob die Kanaldämpfung gestiegen ist, was in der Entscheidung 1645 erörtert wird. Analog zum Verfahren 1500 können die Schritte 1550 und 1560 abhängig von der Antwort der Entscheidung 1645 implementiert werden und in einem Schritt 1670 münden, der ein Senden mit der angepassten Transmitterverstärkung resultiert.

Auch hier erfolgt aufgrund einer veränderten Steuerung durch das Steuersignal 58 eine Anpassung der Transmitteraussteuerung und/oder des Arbeitspunktes.

In anderen Worten zeigt Fig. 15 ein schematisches Flussdiagramm eines Verfahrens gemäß einem Ausführungsbeispiel, bei dem ebenfalls überprüft wird, ob sich ein Kanaldämpfung anzeigendes Steuersignal (angezeigt durch das Steuersignal 58) zwischen zwei Sendeintervallen t; t+1 geändert hat. Falls ja, erfolgt eine Auswertung, ob die Kanaldämpfung gestiegen ist oder nicht, das heißt, ob sie gesunken ist. Falls die Dämpfung gestiegen ist, kann eine Transmitterausteuerung erhöht werden und/oder der Arbeitspunkt reduziert werden, das heißt, beispielsweise ein geringer Arbeitspunktstrom, andernfalls kann die Transmitteraussteuerung reduziert und/oder der Arbeitspunkt erhöht werden. Dieses Verfahren kann dabei unabhängig vom Bit-Loading des DSP sein. Beispielsweise kann dies durch eine Ansteuerung der Verstärkung und/oder des Emitter-Arbeitspunktes erfolgen.

Hierin beschriebene Ausführungsbeispiele beschreiben auch optisch-drahtlose Vorrichtungen, die ausgebildet sind, um das optisch-drahtlose Signal anzupassen, um die Anpassung der Aussteuerung der optischen Signalquelle und/oder die Anpassung des Arbeitspunktes der optischen Signalquelle auszuführen, um die durch die optisch-drahtlose Vorrichtung erzeugten nichtlineare Verzerrungen zu variieren.

Gemäß einem Ausführungsbeispiel kann zur Anpassung der Aussteuerung eine Amplitude und/oder einen Effektivwert eines Wechselanteils des Datensignals angepasst werden, etwa durch einen Signalprozessor und/oder eine Treiberschaltung oder Verstärkerschaltung.

Gemäß einem Ausführungsbeispiel kann eine optisch-drahtlose Vorrichtung zur Anpassung des Arbeitspunktes der optischen Signalquelle ausgebildet sein, um einen Gleichanteil des Datensignals anzupassen und/oder eine Stromaufnahme des optischen Emitters anzupassen. Ein eingeprägter Arbeitspunktstrom bzw. das Einprägen des Arbeitspunktstroms kann bspw. unter Verwendung und Einstellung eines Bias-Tee, einer Stromquelle und/oder durch Ändern des Gleichanteils des Signals 22 erfolgen. Hierbei kann der Treiber die Änderung vornehmen. Gemäß einem Ausführungsbeispiel kann die Treiberschaltung 42 für eine solche Anpassung eingerichtet sein.

Gemäß einem Ausführungsbeispiel kann eine für die Anpassung der Aussteuerung der optischen Signalquelle eingerichtete optisch-drahtlose Vorrichtung ausgebildet sein, um vermittels der Anpassung der Aussteuerung einen Rauschabstand eines späteren optisch-drahtlosen Signals, das in einem nachfolgenden Sendeintervall über den optisch-drahtlosen Kanal gesendet wird, am Ort eines Empfängers des optisch-drahtlosen Signals zu erhöhen. Durch die Reduktion der nichtlinearen Verzerrungen kann bzw. der Erhöhung der Signalleistung somit die Empfangsqualität verbessert werden.

Gemäß einem Ausführungsbeispiel kann die elektronische Datenquelle ausgebildet sein, um basierend auf einem erhöhten Rauschabstand eine Datenrate für das spätere drahtlosoptische Signal zu erhöhen. Das bedeutet, in Erwartung einer besseren Empfangsqualität am Empfänger kann das Bit-Loading mit einer Aussteuerung im DSP entsprechend angepasst werden.

Gemäß einem Ausführungsbeispiel ist eine optisch-drahtlose Vorrichtung für die Anpassung der Aussteuerung der optischen Signalquelle eingerichtet und ausgebildet, um das optisch-drahtlose Signal basierend auf einem ersten Leistungswert des elektronischen Signals auszusenden. Die optisch-drahtlose Vorrichtung kann ausgebildet sein, um basierend auf einer Kanalinformation dergestalt, dass diese eine gegenüber einem vorhergehenden Sendeintervall erhöhte Empfangsleistung und einen reduzierten Rauschabstand am Empfänger des optischen Signals anzeigt, die Aussteuerung der optischen Signalquelle anzupassen, indem ein Wechselanteil eines elektronischen Signals für ein späteres optisch-drahtloses Signal hin zu einem zweiten Wechselanteil reduziert wird, Die optisch-drahtlose Vorrichtung kann zusätzlich dergestalt ausgeführt sein, dass sie basierend auf einer Kanalinformation, dass sie die gegenüber einem vorhergehenden Sendeintervall verringerte Empfangsleistung und einen reduzierten Rauschabstand am Empfänger des optisch-drahtlosen Signals anzeigt, die Aussteuerung der optischen Signalquelle anpasst, indem ein Wechselanteil eines elektronischen Signals für ein späteres optisch-drahtloses Signal hin zu einem zweiten Wechselanteil erhöht wird. Dies ist beispielsweise im Schritt 1550 angezeigt und das Reduzieren des Wechselanteils im Schritt 1560.

Hierin beschriebene Ausführungsbeispiele schaffen optisch-drahtlose Vorrichtungen, die für die Anpassung der Aussteuerung der optischen Signalquelle eingerichtet sind und die ausgebildet sind, um die Kanalinformation als ein Steuersignal 58 zu erhalten, das eine Abhängigkeit von einer Kanaldämpfung und von der nichtlinearen Verzerrung des optisch-drahtlosen Kanals aufweist, beispielsweise das CNR.

Hierin beschriebene optisch-drahtlose Vorrichtungen können so ausgestaltet werden, dass die elektronische Signalquelle ausgebildet ist, um eine Datenrate des Datensignals mittels Bit-Loading basierend auf einem Rauschabstand in vorherigen Sendeintervallen gesendeter und/oder empfangener optischer Signale anzupassen, wie es beispielsweise im Zusammenhang mit den Fig. 14 und 15 erläutert ist.

Hierin beschriebene Ausführungsbeispiele schaffen ferner eine optisch-drahtlose Vorrichtung, die als Transceiver gebildet ist und ausgebildet ist, um optisch-drahtlose Signale zu senden und zu empfangen.

Gemäß einem Ausführungsbeispiel kann eine optisch-drahtlose Vorrichtung ausgebildet sein, um die Anpassung der Aussteuerung der optischen Signalquelle teilweise oder ausschließlich außerhalb eines Sendeintervalls, in welchem ein optisch-drahtloses Signal gesendet wird, auszuführen, etwa um die dadurch verursachten Nichtlinearitäten zu vermeiden. Alternativ oder zusätzlich kann die Vorrichtung ausgebildet sein, um die Anpassung des Arbeitspunktes der optischen Signalquelle teilweise oder ausschließlich außerhalb eines Sendeintervalls, in welchem ein optisch-drahtloses Signal gesendet wird, auszuführen, auch hier, um die Nichtlinearitäten zu vermeiden.

Gemäß einem Ausführungsbeispiel kann eine optisch-drahtlose Vorrichtung ausgebildet sein, um die Anpassung der Aussteuerung der optischen Signalquelle schrittweise auszuführen, wobei eine Schrittgröße so an den optisch-drahtlosen Kanal angepasst ist, dass durch die Veränderung auftretende nichtlineare Verzerrungen in dem optisch-drahtlosen Kanal vernachlässigbar sind. Dies ermöglicht auch eine Einstellung während des Sendens, wenngleich durch die Anwendung mehrerer kleinerer Schritte ein höherer Zeitbedarf resultieren kann. Alternativ oder zusätzlich kann die Anpassung des Arbeitspunktes der optischen Signalquelle schrittweise ausgeführt werden und eine Schrittgröße so an den optisch-drahtlosen Kanal angepasst sein, dass durch die Veränderung auftretende nichtlineare Verzerrungen in dem optisch-drahtlosen Kanal vernachlässigbar sind. Hierzu kann die Schrittgröße bspw. so gewählt werden, dass das daraus resultierende Rauschen infolge von nicht-linearen Verzerrungen das Rauschen am Ausgang des Empfängers um weniger als 20 %, 15 % oder 10 % erhöht wird, das bedeutet, dieser Rauschanteil ist deutlicher kleiner als das intrinsische Receiverrauschen.

Gemäß einem Ausführungsbeispiel ist die optisch-drahtlose Vorrichtung ausgebildet, um das optisch-drahtlose Signal als ein amplitudenmoduliertes Signal oder als ein Mehrträgermoduliertes Signal wie bspw. ein orthogonales Frequenzmultiplex (OFDM)-Signal zu senden.

Gemäß einem Ausführungsbeispiel ist die optisch-drahtlose Vorrichtung ausgebildet, um die Kanalinformation als eine Anweisung zu erhalten, die Aussteuerung anzupassen oder den Arbeitspunkt einzustellen, und um die Anweisung umzusetzen. Hierzu kann beispielsweise das Steuersignal 58 genutzt werden.

Hierin beschriebene Ausführungsbeispiele beschreiben ferner ein optisch-drahtloses Netzwerk mit einer optisch-drahtlosen Vorrichtung gemäß einem der hierin beschriebenen Ausführungsbeispiele und einem Empfänger zum Empfangen des optisch-drahtlosen Signals. Dieser Empfänger kann optional ausgebildet sein, um eine entsprechende Rückmeldung zur Schätzung des Kanals auszugeben.

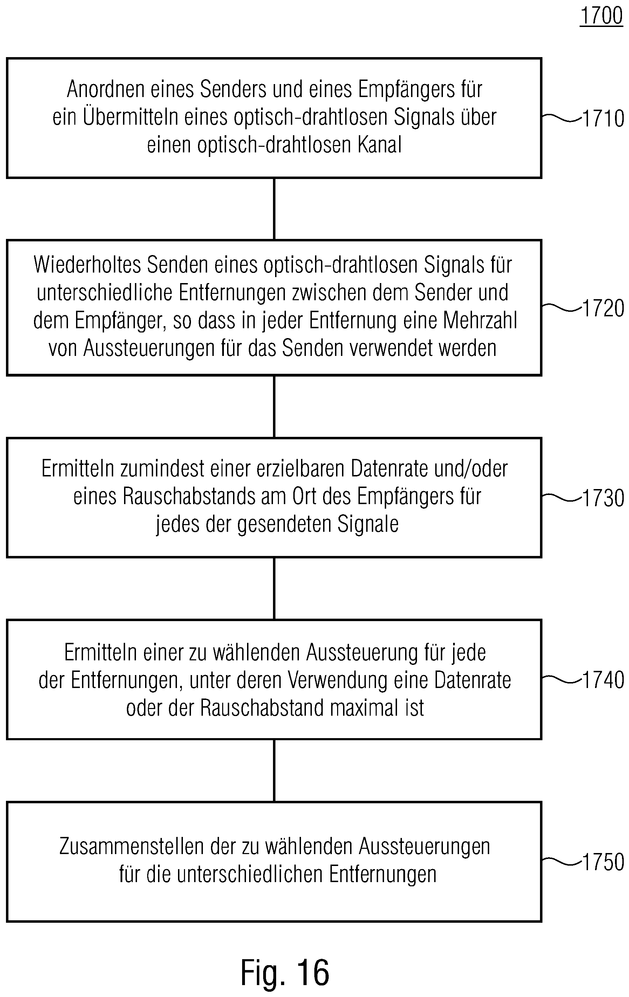

Fig. 16 zeigt ein schematisches Flussdiagramm eines Verfahrens 1700 gemäß einem Ausführungsbeispiel. Ein Schritt 1710 umfasst ein Anordnen eines Senders und eines Empfängers für ein Übermitteln eines optisch-drahtlosen Signals über einen optisch-drahtlosen Kanal. Ein Schritt 1720 umfasst ein wiederholtes Senden eines optisch-drahtlosen Signals für unterschiedliche Entfernungen zwischen dem Sender und dem Empfänger, so dass in jeder Entfernung eine Mehrzahl von Aussteuerungen für das Senden verwendet werden. Unter Bezugnahme auf die Tabellen der Fig. 12a, 12b und 12c können somit für unterschiedliche Entfernungen jeweils mehrere der Aussteuerungen getestet werden, siehe hierzu die Tabelle der Fig. 12a.

Ein Schritt 1730 umfasst ein Ermitteln zumindest einer erzielbaren Datenrate und/oder eines Rauschabstands am Ort des Empfängers für jedes der gesendeten Signale, siehe hierzu beispielsweise die Messgröße der Fig. 12b und/oder die Datenrate in der Fig. 12a.

Ein Schritt 1740 umfasst ein Ermitteln einer zu wählenden Aussteuerung für jede der Entfernungen, unter deren Verwendung eine Datenrate oder der Rauschabstand maximal ist, siehe hierzu die Inhalte der Tabelle der Fig. 12c.

Ein Schritt 1750 umfasst ein Zusammenstellen der zu wählenden Aussteuerung für die unterschiedlichen Entfernungen, was beispielsweise in dem Informationsspeicher 72 hinterlegt werden kann.

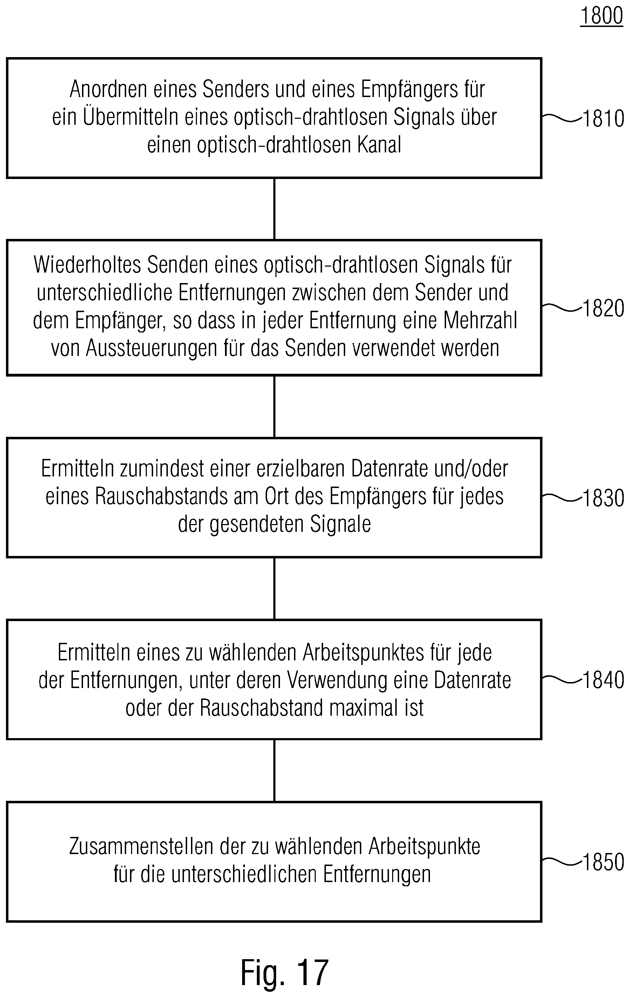

Fig. 17 zeigt ein schematisches Flussdiagramm eines Verfahrens 1800 gemäß einem Ausführungsbeispiel. Verglichen mit dem Verfahren 1700 kann es verwendet werden, um die Einstellung der Arbeitspunkte der optischen Signalquelle zu ermitteln. In einem Schritt 1810 erfolgt ein Anordnen eines Senders und eines Empfängers für ein Übermitteln eines optisch-drahtlosen Signals über einen optisch-drahtlosen Kanal. In einem Schritt 1820 erfolgt ein wiederholtes Senden eines optisch-drahtlosen Signals für unterschiedliche Entfernungen zwischen dem Sender und dem Empfänger, so dass in jeder Entfernung eine Mehrzahl von Arbeitspunkten für das Senden verwendet werden.

Ein Schritt 1830 umfasst ein Ermitteln zumindest einer erzielbaren Datenrate und/oder eines Rauschabstands am Ort des Empfängers für jedes der gesendeten Signale.

In einem Schritt 1840 erfolgt ein Ermitteln eines zu wählenden Arbeitspunktes für jede der Entfernungen, unter deren Verwendung eine Datenrate oder der Rauschabstand maximal ist.

In einem Schritt 1850 erfolgt ein Zusammenstellen der zu wählenden Arbeitspunkte für die unterschiedlichen Entfernungen.

Gemäß Ausführungsbeispielen können die Variationen in der Aussteuerung sowohl für die Anpassung der Betriebszustände der elektronischen Signalquelle als auch für die Anpassung der Arbeitspunkte der optischen Signalquelle ausgeführt werden, wobei auch lediglich eines dieser beiden Konzepte möglich ist, abhängig von der späteren Einstellungsmöglichkeit in der optisch-drahtlosen Vorrichtung.

Ausführungsbeispiele haben den positiven Nebeneffekt, dass auch Übersteuern am Receiver vermieden beziehungsweise reduziert wird, ähnlich wie bei einer automatischen Verstärkungsanpassung (AGC) am Receiver. Da bei geringer Kanaldämpfung der AC-Anteil des Sendesignals verringert wird, führt dieser nicht so schnell zu einem Übersteuern. Führt der DC-Anteil des optischen Signals zur Sättigung des Receivers, führt die hier beschriebene Erfindung zu keiner Verbesserung.

Der Regelungsbereich kann einige wenige dB sein, aber auch, wie Fig. 2a zeigt, mehr als 10dB überstreichen. Der konkrete nutzbare Bereich richtet sich nach der max. Modulationstiefe des OFDM-Signals und der konkreten technischen Realisierung der Regelung.

Ausführungsbeispiele sind dabei nicht auf OFDM-Signale beschränkt, sondern beziehen sich auch auf andere Arten der Signalmodulation, bei den nicht-lineare Verzerrungen negativen Einfluss nehmen können, beispielsweise bei einer Amplitudenmodulation. Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

<u>Literatur</u>

[a] Elgala, H. ; Mesleh, R. ; Haas, H.: A study of LED nonlinearity effects on optical wireless transmission using OFDM. In: 2009 IFIP International Conference on Wireless and Optical Communications Networks, IEEE, 2009, S. 1-5

[b] Huang, Xingxing ; Wang, Zhixin ; Shi, Jianyang ; Wang, Yiguang ; Chi, Nan: 1.6 Gbit/s phosphorescent white LED based VLC transmission using a cascaded preequalization circuit and a differential outputs PIN receiver. In: Opt. Express 23 (2015), Aug., Nr. 17, S. 22034-22042. http: //dx.doi.org/10.1364/OE.23.022034

[c] Chun, H. ; Rajbhandari, S. ; Tsonev, D. ; Faulkner, G. ; Haas, H. ; O'Brien, D.: Visible light communication using laser diode based remote phosphor technique. In: 2015 IEEE International Conference on Communication Workshop (ICCW), IEEE, 2015, S. 1392-1397. http://dx.doi.org/10.1109/ICCW.2015.7247373

[d] Ying, K. ; Yu, Z. ; Baxley, R. J. ; Qian, H. ; Chang, G. ; Zhou, G. T.: Nonlinear distortion mitigation in visible light communications. In: IEEE Wireless Communications 22 (2015), Nr. 2, S. 36-45

[e] Khalid, A. M. ; Cossu, G. ; Corsini, R. ; Choudhury, P. ; Ciaramella, E.: 1-Gb/s Transmission Over a Phosphorescent White LED by Using Rate-Adaptive Discrete Multitone Modulation. In: IEEE Photonics Journal 4 (2012), Nr. 5, S. 1465-1473

[f] Hong, Y. ; Wu, T. ; Chean, L.: On the Performance of Adaptive MIMO-OFDM Indoor Visible Light Communications. In: IEEE Photonics Technology Letters 28 (2016), Nr. 8, S. 907-910. http://dx.doi.org/10.1109/LPT.2016.2517192

**Patentansprüche**

1. Optisch-drahtlose Vorrichtung, die zum Senden eines optisch-drahtlosen Signals (14) über einen optisch-drahtlosen Kanal (16) eingerichtet ist und die Folgendes aufweist:

    eine elektronische Signalquelle (18), die ausgebildet ist, um ein Datensignal (22) bereitzustellen; und
    eine optische Signalquelle (24), die ausgebildet ist, um das Datensignal (22) in das optisch-drahtlose Signal (14) zu überführen und auszusenden;
    wobei die optisch-drahtlose Vorrichtung ausgebildet ist, um eine Kanalinformation (26) zu erhalten, die eine mit einer nichtlinearen Kanalverzerrung des optisch-drahtlosen Signals (14) in dem optisch-drahtlosen Kanal (16) assoziierte Information aufweist; und **gekennzeichnet ist, dadurch**, dass
    die optisch-drahtlose Vorrichtung ausgebildet ist, um eine Anpassung einer eine Amplitudenvariation um einen Mittelwert beschreibenden Aussteuerung der optischen Signalquelle (24) **durch** Ändern eines Betriebszustandes der elektronischen Signalquelle (18) **durch** Ändern einer Aussteuerung eines digitalen Signalprozessors, DSP, und/oder **durch** Anpassen einer Verstärkung eines Treibers der elektronischen Signalquelle (18) zur Anpassung der nichtlinearen Kanalverzerrung auszuführen und/oder um eine Anpassung eines Arbeitspunktes der optischen Signalquelle (24) zur Anpassung der nichtlinearen Kanalverzerrung auszuführen;
    wobei diese Anpassung der nichtlinearen Kanalverzerrung eine Kompensation oder Reduktion der nichtlinearen Kanalverzerrung umfasst.

2. Optisch-drahtlose Vorrichtung gemäß Anspruch 1, wobei die Anpassung der nichtlinearen Kanalverzerrung abhängig von der momentanen Transmitter-Receiver-Anordnung oder der momentanen Kanaldämpfung ist.

3. Optisch-drahtlose Vorrichtung gemäß Anspruch 1 oder 2, bei der die Kanalinformation (26) auf einem Rauschabstand des optisch-drahtlosen Signals (14) und auf einer Signalleistung des optisch-drahtlosen Signals (14) an einem Empfänger (12) basiert.

4. Optisch-drahtlose Vorrichtung gemäß einem der vorangehenden Ansprüche, bei der das optisch-drahtlose Signal (14) ein erstes optisch-drahtloses Signal ist, das in einem ersten Sendeintervall ausgesendet wird;

    wobei die optisch-drahtlose Vorrichtung ausgebildet ist, um für ein Senden eines zweiten optisch-drahtlosen Signals in einem späteren zweiten Sendeintervall festzustellen, dass eine Kanaldämpfung verglichen mit dem ersten Sendeintervall gestiegen ist, und um die Aussteuerung zu erhöhen und/oder um den Arbeitspunkt zu verringern; und/oder
    wobei die optisch-drahtlose Vorrichtung ausgebildet ist, um für ein Senden eines zweiten optisch-drahtlosen Signals in einem späteren zweiten Sendeintervall festzustellen, dass eine Kanaldämpfung verglichen mit dem ersten Sendeintervall verringert ist, und um die Aussteuerung zu verringern und/oder um den Arbeitspunkt zu erhöhen.

5. Optisch-drahtlose Vorrichtung gemäß einem der vorangehenden Ansprüche, bei der die Kanalinformation (26) zumindest teilweise auf einer Rückmeldung eines Empfängers (12) des optisch-drahtlosen Signals (14) bezüglich einer Signalleistung des optisch-drahtlosen Signals (14) am Empfänger (12) und einem Rauschabstand des optisch-drahtlosen Signals (14) am Empfänger (12) basiert.

6. Optisch-drahtlose Vorrichtung gemäß einem der vorangehenden Ansprüche, die ausgebildet ist, um das optisch-drahtlose Signal (14) als ein erstes optisch-drahtloses Signal über den optisch-drahtlosen Kanal (16) zu senden; und für einen Empfang eines zweiten optisch-drahtlosen Signals (14) über den optisch-drahtlosen Kanal (16) eingerichtet ist; und ausgebildet ist, um eine Kanalschätzung des optisch-drahtlosen Kanals (16) basierend auf dem zweiten optisch-drahtlosen Signal auszuführen, um einen Rauschabstand des zweiten Signals zu bestimmen.

7. Optisch-drahtlose Vorrichtung gemäß einem der vorangehenden Ansprüche, die zur Anpassung der Aussteuerung ausgebildet ist, eine Amplitude und/oder einen Effektivwert eines Wechselanteils des Datensignals (22) anzupassen; oder die zur Anpassung des Arbeitspunktes ausgebildet ist, um einen Gleichanteil des Datensignals (22) anzupassen.

8. Optisch-drahtlose Vorrichtung gemäß einem der vorangehenden Ansprüche, die für die Anpassung der Aussteuerung der optischen Signalquelle (24) eingerichtet ist; und ausgebildet ist, um mittels der Anpassung der Aussteuerung einen Rauschabstand eines späteren optisch-drahtlosen Signals, das in einem nachfolgenden Sendeintervall über den optisch-drahtlosen Kanal (16) gesendet wird, am Ort eines Empfängers (12) des optisch-drahtlosen Signals (14) zu erhöhen; und/oder

bei der die elektronische Signalquelle (18) ausgebildet ist, um eine Datenrate des Datensignals (22) basierend auf einem Rauschabstand in vorherigen Sendeintervallen gesendeter und/oder empfangener optischer Signale anzupassen.

9. Optisch-drahtlose Vorrichtung gemäß einem der vorangehenden Ansprüche, die für die Anpassung der Aussteuerung der optischen Signalquelle (24) eingerichtet ist; und ausgebildet ist, um das optisch-drahtlose Signal basierend auf einem ersten Leistungswert des elektronischen Signals auszusenden;

wobei die optisch-drahtlose Vorrichtung ausgebildet ist, um basierend auf einer Kanalinformation (26) dergestalt, dass diese eine gegenüber einem vorhergehenden Sendeintervall erhöhte Empfangsleistung und einen reduzierten Rauschabstand am Empfänger (12) des optisch-drahtlosen Signals (14) anzeigt, die Aussteuerung der optischen Signalquelle (24) anzupassen, indem ein Wechselanteil eines elektronischen Signals für ein späteres optisch-drahtloses Signal hin zu einem zweiten Wechselanteil reduziert wird; und/oder

wobei die optisch-drahtlose Vorrichtung ausgebildet ist, um basierend auf einer Kanalinformation (26) dergestalt, dass diese eine gegenüber einem vorhergehenden Sendeintervall verringerte Empfangsleistung und einen reduzierten Rauschabstand am Empfänger (12) des optisch-drahtlosen Signals (14) anzeigt, die Aussteuerung der optischen Signalquelle (24) anzupassen, indem ein Wechselanteil eines elektronischen Signals für ein späteres optisch-drahtloses Signal hin zu einem zweiten Wechselanteil erhöht wird.

10. Optisch-drahtlose Vorrichtung gemäß einem der vorangehenden Ansprüche, die für die Anpassung der Aussteuerung der optischen Signalquelle (24) eingerichtet ist; und die ausgebildet ist, um die Kanalinformation (26) als ein Steuersignal (58) zu erhalten, das eine Abhängigkeit von einer Kanaldämpfung und von der nichtlinearen Kanalverzerrung des optisch-drahtlosen Kanals (16) aufweist.

11. Optisch-drahtlose Vorrichtung gemäß einem der vorangehenden Ansprüche, die für die Anpassung der Aussteuerung der optischen Signalquelle (24) eingerichtet ist; wobei die Kanalinformation (26) auf einem Wechselanteil eines von einem Empfänger (12) des optisch-drahtlosen Kanals (16) empfangenen optisch-drahtlosen Signals (14) basiert und mit einer Anpassung eines Verstärkungsfaktors der elektronischen Signalquelle (18) assoziiert ist.

12. Optisch-drahtlose Vorrichtung gemäß einem der vorangehenden Ansprüche, die für die Anpassung der Aussteuerung der optischen Signalquelle (24) eingerichtet ist; und die einen Informationsspeicher (72) mit unterschiedlichen vordefinierten Werten für die Aussteuerung, die mit unterschiedlichen Werten der Kanalverzerrung assoziiert sind, hinterlegt sind; und die ausgebildet ist, um aus dem Informationsspeicher (72) unter Verwendung der Kanalinformation (26) einen einzustellenden Wert für die Aussteuerung zu erhalten und anzuwenden; und/oder

die für die Anpassung des Arbeitspunktes der optischen Signalquelle (24) eingerichtet ist; und die einen Informationsspeicher (72) mit unterschiedlichen vordefinierten Werten für den Arbeitspunkt, die mit unterschiedlichen Werten der Kanalverzerrung assoziiert sind, hinterlegt sind; und die ausgebildet ist, um aus dem Informationsspeicher (72) unter Verwendung der Kanalinformation (26) einen einzustellenden Wert für den Arbeitspunktes zu erhalten und anzuwenden.

13. Optisch-drahtlose Vorrichtung gemäß einem der vorangehenden Ansprüche, die für die Anpassung der Aussteuerung der optischen Signalquelle (24) eingerichtet ist; wobei die optisch-drahtlose Vorrichtung ausgebildet ist, um durch die Anpassung einen Rauschanteil der nichtlinearen Kanalverzerrung an einem Gesamtrauschen am Ort des Empfängers (12) in einer Größenordnung mit einem internen Empfängerrauschen ($u_{n\,Rx}$) zu erhalten.

14. Optisch-drahtlose Vorrichtung gemäß einem der vorangehenden Ansprüche, die zum Anpassen des Arbeitspunktes eingerichtet ist, wobei die optisch-drahtlose Vorrichtung ausgebildet ist, bei einem nicht-dominanten oder wenig relevanten Anteil der nichtlinearen Kanalverzerrungen an einem Gesamtrauschen und geringen Rauschabstand des optisch-drahtlosen Signals (14) an einem Empfänger (12) desselben und einer hohen Datenrate in dem optisch-drahtlosen Signal den Arbeitspunkt zu verringern.

15. Optisch-drahtlose Vorrichtung gemäß einem der vorangehenden Ansprüche, die ausgebildet ist, um die Anpassung der Aussteuerung der optischen Signalquelle (24) teilweise oder ausschließlich außerhalb eines Sendeintervalls, in welchem ein optisch-drahtloses Signal gesendet wird, auszuführen; und/oder um die Anpassung des Arbeitspunktes der optischen Signalquelle (24) teilweise oder ausschließlich außerhalb eines Sendeintervalls, in welchem ein optisch-drahtloses Signal gesendet wird, auszuführen; oder

die ausgebildet ist, um die Anpassung der Aussteuerung der optischen Signalquelle (24) schrittweise auszuführen, wobei eine Schrittgröße so an den optisch-drahtlosen Kanal (16) angepasst ist, dass durch die Veränderung auftretende nichtlineare Kanalverzerrungen in dem optisch-drahtlosen Kanal (16) vernachlässigbar sind; und/oder um die Anpassung des Arbeitspunktes der optischen Signalquelle (24) schrittweise auszuführen, wobei eine Schrittgröße so an den optisch-drahtlosen Kanal (16) angepasst ist, dass durch die Veränderung auftretende nichtlineare Kanalverzerrungen in dem optisch-drahtlosen Kanal (16) vernachlässigbar sind.

**Claims**

1. An optical wireless apparatus implemented for transmitting an optical wireless signal (14) via an optical wireless channel (16), comprising:

   an electronic signal source (18) configured to provide a data signal (22); and
   an optical signal source (24) configured to convert the data signal (22) into the optical wireless signal (14) and to emit the same;
   wherein the optical wireless apparatus is configured to obtain channel information (26) comprising information associated with a non-linear channel distortion of the optical wireless signal (14) in the optical wireless channel (16); and **characterized in that**
   the optical wireless apparatus is configured to perform adaptation of a modulation of the optical signal source (24), describing an amplitude variation by a mean value, by changing an operating state of the electronic signal source (18) by changing a modulation of a digital signal processor, DSP, and/or by adapting an amplification of a driver of the electronic signal source (18) for adapting the non-linear channel distortion and/or to perform adaptation of an operating point of the optical signal source (24) for adapting the non-linear channel distortion;
   wherein this adaptation of the non-linear channel distortion comprises compensation or reduction of the non-linear channel distortion.

2. The optical wireless apparatus according to claim 1, wherein the adaptation of the non-linear channel distortion depends on the current transmitter-receiver arrangement or the current channel attenuation.

3. The optical wireless apparatus according to claim 1 or 2, wherein the channel information (26) is based on a noise ratio of the optical wireless signal (14) and on a signal power of the optical wireless signal (14) at a receiver (12).

4. The optical wireless apparatus according to any of the preceding claims, wherein the optical wireless signal (14) is a first optical wireless signal that is emitted in a first transmission interval,

   wherein the optical wireless apparatus is configured to determine, for transmitting a second optical wireless signal in a later second transmission interval, that a channel attenuation has increased compared to the first transmission interval, and to increase the modulation and/or to reduce the operating point; and/or
   wherein the optical wireless apparatus is configured to determine, for transmitting a second optical wireless signal in a later second transmission interval, that a channel attenuation is reduced compared to the first transmission interval, and to reduce the modulation and/or to increase the operating point.

5. The optical wireless apparatus according to any of the preceding claims, wherein the channel information (26) is based at least partly on a feedback of a receiver (12) of the optical wireless signal (14) with respect to a signal power of the optical wireless signal (14) at the receiver (12) and a noise ratio of the optical wireless signal (14) and the receiver (12).

6. The optical wireless apparatus according to any of the preceding claims, configured to transmit the optical wireless signal (14) as a first optical wireless signal via the optical wireless channel (16) and is implemented to receive a second optical wireless signal (14) via the optical wireless channel (16), and is configured to perform channel estimation of the optical wireless channel (16) based on the second optical wireless signal to determine a noise ratio of the second signal.

7. The optical wireless apparatus according to any of the preceding claims, configured to adapt the modulation to adapt an amplitude and/or an effective value of an alternating component of the data signal (22); or configured to adapt the operating point to adapt a direct component of the data signal (22).

8. The optical wireless apparatus according to any of the preceding claims, implemented for the adaptation of the modulation of the optical signal source (24) and configured to increase, by means of adapting the modulation, a noise ratio of a later optical wireless signal that is transmitted in a subsequent transmission interval via the optical wireless channel (16) at the location of a receiver (12) of the optical wireless signal (14); and/or
wherein the electronic signal source (18) is configured to adapt a data rate of the data signal (22) based on a noise ratio in the previous transmission interval of transmitted and/or received optical signals.

9. The optical wireless apparatus according to any of the preceding claims, implemented for the adaptation of the modulation of the optical signal source (24) and configured to emit the optical wireless signal based on a first power value of the electronic signal,

wherein the optical wireless apparatus is configured to adapt the modulation of the optical signal source (24) based on channel information (26), such that the same indicates an increased received power and a reduced noise ratio at the receiver (12) of the optical wireless signal compared to a previous transmission interval, by reducing an alternating component of an electronic signal for a later optical wireless signal towards a second alternating component; and/or
wherein the optical wireless apparatus is configured to adapt the modulation of the optical signal source (24) based on channel information (26), such that the same indicates a reduced received power and a reduced noise ratio at the receiver (12) of the optical wireless signal (14) compared to a previous transmission interval, by increasing an alternating component of an electronic signal for a later optical wireless signal towards a second alternating component.

10. The optical wireless apparatus according to any of the preceding claims, implemented for the adaptation of the modulation of the optical signal source (24) and configured to obtain the channel information (26) as a control signal (58) that shows a dependence on a channel attenuation and on the non-linear channel distortion of the optical wireless channel (16).

11. The optical wireless apparatus according to any of the preceding claims implemented for the adaptation of the modulation of the optical signal source (24), wherein the channel information (26) is based on an alternating component of an optical wireless signal (14) received by a receiver (12) of the optical wireless channel (16) and is associated with an adaptation of a gain factor of the electronic signal source (18).

12. The optical wireless apparatus according to any of the preceding claims, implemented for the adaptation of the modulation of the optical signal source (24) and comprising an information memory (72) in which different predefined values for the modulation that are associated with different values of the channel distortion are stored, and configured to obtain and apply a value to be adjusted for the modulation from the information memory (72) by using the channel information (26); and/or
implemented for the adaptation of the operating point of the optical signal source (24), and comprising an information memory (72) in which different predefined values for the operating point that are associated with different values of the channel distortion are stored, and configured to obtain and apply a value to be adjusted for the operating point from the information memory (72) by using the channel information (26).

13. The optical wireless apparatus according to any of the preceding claims, implemented for the adaptation of the modulation of the optical signal source (24), wherein the optical wireless apparatus is configured to obtain, by the adaptation, a noise component of the non-linear channel distortion of an overall noise at the location of the receiver (12) in an order of an internal receiver noise ($u_{n\,Rx}$).

14. The optical wireless apparatus according to any of the preceding claims, implemented for adapting the operating point, wherein the optical wireless apparatus is configured to reduce the operating point in a non-dominant or less relevant component of the non-linear channel distortions of an overall noise and low noise ratio of the optical wireless signal (14) at a receiver (12) of the same and a high data rate in the optical wireless signal.

15. The optical wireless apparatus according to any of the preceding claims, configured to perform the adaptation of the modulation of the optical signal source (24) partly or exclusively outside a transmission interval in which an optical wireless signal is transmitted; and/or to perform the adaptation of the operating point of the optical signal source (24) partly or exclusively outside a transmission interval in which an optical wireless signal is transmitted; or
configured to perform the adaptation of the modulation of the optical signal source (24) gradually, wherein a step size is adapted to the optical wireless channel (16) such that non-linear channel distortions in the optical wireless channel (16) occurring due to the change can be neglected; and/or to perform the adaptation of the operating point of the optical signal source (24) gradually, wherein a step size is adapted to the optical wireless channel (16) such that non-linear channel distortions in the optical wireless channel (16) occurring due to the change can be neglected.

**Revendications**

1. Dispositif optique sans fil, qui est configuré pour transmettre un signal optique sans fil (14) sur un canal optique sans fil (16) et présente les éléments suivants :

   une source de signal électronique (18) qui est conçue pour fournir un signal de données (22) ; et
   une source de signal optique (24), qui est conçue pour convertir le signal de données (22) en un signal optique sans fil (14) et le transmettre ;
   dans lequel le dispositif optique sans fil est conçu pour obtenir des informations de canal (26) qui présentent des informations associées à une distorsion de canal non linéaire du signal optique sans fil (14) dans le canal optique sans fil (16) ; et **caractérisé en ce que**
   le dispositif optique sans fil est conçu pour réaliser une adaptation d'une modulation de la source de signal optique (24) décrivant une variation d'amplitude d'une valeur moyenne en modifiant un état de fonctionnement de la source de signal électronique (18) en modifiant une modulation d'un processeur de signal numérique, DSP, et/ou en adaptant une amplification d'un pilote de la source de signal électronique (18) afin d'adapter la distorsion de canal non linéaire et/ou pour réaliser une adaptation d'un point de fonctionnement de la source de signal optique (24) afin d'adapter la distorsion de canal non linéaire,
   dans lequel cette adaptation de la distorsion de canal non linéaire comprend une compensation ou réduction de la distorsion de canal non linéaire.

2. Dispositif optique sans fil selon la revendication 1, dans lequel l'adaptation de la distorsion de canal non linéaire dépend de l'agencement émetteur-récepteur actuel ou de l'atténuation de canal actuelle.

3. Dispositif optique sans fil selon la revendication 1 ou 2, dans lequel les informations de canal (26) sont basées sur un rapport signal sur bruit du signal optique sans fil (14) et sur une puissance de signal du signal optique sans fil (14) au niveau d'un récepteur (12).

4. Dispositif optique sans fil selon l'une quelconque des revendications précédentes, dans lequel le signal optique sans fil (14) est un premier signal optique sans fil qui est transmis dans un premier intervalle de transmission ;

   dans lequel le dispositif optique sans fil est conçu, afin de transmettre un second signal optique sans fil dans un second intervalle de transmission ultérieur, pour déterminer qu'une atténuation de canal a augmenté par rapport au premier intervalle de transmission et pour augmenter la modulation et/ou pour diminuer le point de fonctionnement ; et/ou
   dans lequel le dispositif optique sans fil est conçu, afin de transmettre un second signal optique sans fil dans un second intervalle de transmission ultérieur, pour déterminer qu'une atténuation de canal a diminué par rapport au premier intervalle de transmission et pour diminuer la modulation et/ou pour augmenter le point de fonctionnement.

5. Dispositif optique sans fil selon l'une quelconque des revendications précédentes, dans lequel les informations de canal (26) sont basées au moins en partie sur un retour d'information en provenance d'un récepteur (12) du signal optique sans fil (14) concernant une puissance de signal du signal optique sans fil (14) au niveau du récepteur (12) et un rapport signal sur bruit du signal optique sans fil (14) au niveau du récepteur (12).

6. Dispositif optique sans fil selon l'une quelconque des revendications précédentes, qui est conçu pour transmettre le signal optique sans fil (14) en tant que premier signal optique sans fil sur le canal optique sans fil (16) ; et est configuré pour recevoir un second signal optique sans fil (14) sur le canal optique sans fil (16) ; et est conçu pour réaliser une estimation de canal du canal optique sans fil (16) en se basant sur le second signal optique sans fil afin de définir un rapport signal sur bruit du second signal.

7. Dispositif optique sans fil selon l'une quelconque des revendications précédentes, qui, afin d'adapter la modulation, est conçu pour adapter une amplitude et/ou une valeur efficace d'une composante alternative du signal de données (22) ; ou qui, afin d'adapter le point de fonctionnement, est conçu pour adapter une composante continue du signal de données (22).

8. Dispositif optique sans fil selon l'une quelconque des revendications précédentes, qui est configuré pour adapter la modulation de la source de signal optique (24) ; et est conçu pour augmenter à l'aide de l'adaptation de la modulation, un rapport signal sur bruit d'un signal optique sans fil ultérieur, qui est transmis dans un intervalle de transmission ultérieur sur le canal optique sans fil (16), au niveau de l'emplacement d'un récepteur (12) du signal optique sans fil (14) ; et/ou dans lequel la source de signal électronique (18) est conçue pour adapter un débit de données du signal de données (22) en se basant sur un rapport signal sur bruit dans des intervalles de transmission précédents de signaux optiques transmis et/ou reçus.

9. Dispositif optique sans fil selon l'une quelconque des revendications précédentes, qui est configuré pour adapter la modulation de la source de signal optique (24) ; et est conçu pour transmettre le signal optique sans fil en se basant sur une première valeur de puissance du signal électronique ;
dans lequel le dispositif optique sans fil est conçu pour adapter la modulation de la source de signal optique (24) en se basant sur des informations de canal (26) de telle sorte que celles-ci indiquent une puissance de réception augmentée par rapport à un intervalle de transmission précédent et un rapport signal sur bruit diminué au niveau du récepteur (12) du signal optique sans fil (14) en diminuant une composante alternative d'un signal électronique pour un signal optique sans fil ultérieur sur une seconde composante alternative ; et/ou dans lequel le dispositif optique sans fil est conçu pour adapter la modulation de la source de signal optique (24) en se basant sur des informations de canal (26) de telle sorte que celles-ci indiquent une puissance de réception diminuée par rapport à un intervalle de transmission précédent et un rapport signal sur bruit diminué au niveau du récepteur (12) du signal optique sans fil (14) en augmentant une composante alternative d'un signal électronique pour un signal optique sans fil ultérieur sur une seconde composante alternative.

10. Dispositif optique sans fil selon l'une quelconque des revendications précédentes, qui est configuré pour adapter la modulation de la source de signal optique (24) ; et qui est conçu pour obtenir les informations de canal (26) en tant que signal de commande (58) qui présente une dépendance à une atténuation de canal et à la distorsion de canal non linéaire du canal optique sans fil (16).

11. Dispositif optique sans fil selon l'une quelconque des revendications précédentes, qui est configuré pour adapter la modulation de la source de signal optique (24) ; dans lequel les informations de canal (26) sont basées sur une composante alternative d'un signal optique sans fil (14) reçu au niveau d'un récepteur (12) du canal optique sans fil (16) et sont associées à une adaptation d'un facteur de gain de la source de signal électronique (18).

12. Dispositif optique sans fil selon l'une quelconque des revendications précédentes, qui est configuré pour adapter la modulation de la source de signal optique (24) ; et qui présente une mémoire d'informations (72) avec différentes valeurs prédéfinies pour la modulation, qui sont associées à différentes valeurs de la distorsion de canal ; et qui est conçu pour obtenir et appliquer, à partir de la mémoire d'informations (72), une valeur à régler pour la modulation en utilisant les informations de canal (26) ; et/ou
qui est configuré pour adapter le point de fonctionnement de la source de signal optique (24) ; et qui présente une mémoire d'informations (72) avec différentes valeurs prédéfinies pour le point de fonctionnement, qui sont associées à différentes valeurs de la distorsion de canal ; et qui est conçu pour obtenir et appliquer, à partir de la mémoire d'informations (72), une valeur à régler pour le point de fonctionnement en utilisant les informations de canal (26).

13. Dispositif optique sans fil selon l'une quelconque des revendications précédentes, qui est configuré pour adapter la modulation de la source de signal optique (24) ; dans lequel le dispositif optique sans fil est conçu pour obtenir, par l'adaptation, une composante de bruit de la distorsion de canal non linéaire sur un bruit total au niveau de l'emplacement du récepteur (12) dans une amplitude avec un bruit interne de récepteur ($U_{nRx}$).

14. Dispositif optique sans fil selon l'une quelconque des revendications précédentes, qui est configuré pour adapter le point de fonctionnement, dans lequel le dispositif optique sans fil est conçu pour diminuer le point de fonctionnement dans le cas d'une proportion non dominante ou peu pertinente des distorsions de canal non linéaires dans un bruit total et un faible rapport signal sur bruit du signal optique sans fil (14) au niveau d'un récepteur (12) de celui-ci et un débit de données élevé dans le signal optique sans fil.

15. Dispositif optique sans fil selon l'une quelconque des revendications précédentes, qui est conçu pour réaliser la modulation de la source de signal optique (24) partiellement ou exclusivement en dehors d'un intervalle de transmission dans lequel un signal optique sans fil est transmis ; et/ou pour réaliser l'adaptation du point de fonctionnement de la source de signal optique (24) partiellement ou exclusivement en dehors d'un intervalle de transmission dans lequel un signal optique sans fil est transmis ; ou

qui est conçu pour réaliser pas à pas l'adaptation de la modulation de la source de signal optique (24), dans lequel une taille de pas est adaptée au canal optique sans fil (16) de telle sorte que les distorsions de canal non linéaires dans le canal optique sans fil (16) se produisant en raison du changement soient négligeables ; et/ou pour réaliser pas à pas l'adaptation du point de fonctionnement de la source de signal optique (24), dans lequel une taille de pas est adaptée au canal optique sans fil (16) de telle sorte que les distorsions de canal non linéaires dans le canal optique sans fil (16) se produisant en raison du changement soient négligeables.

EP 4 057 525 B1

Fig. 1a

Fig. 1b

Fig. 2a

EP 4 057 525 B1

Fig. 2b

Fig. 3

EP 4 057 525 B1

Fig. 4

EP 4 057 525 B1

Fig. 5

EP 4 057 525 B1

Fig. 6

EP 4 057 525 B1

Fig. 7

Fig. 8

EP 4 057 525 B1

Fig. 9

Fig. 10a

EP 4 057 525 B1

Fig. 10b

EP 4 057 525 B1

Fig. 11

EP 4 057 525 B1

| Entfernung / Aussteuerung | 0,15 m | 0,4 m | 1 m | 2 m | 4 m | 6 m | 8 m | 10 m |
|---|---|---|---|---|---|---|---|---|
| 9,3 dBm | 607 | 1233 | 783 | 367 | 0 | 0 | 0 | 0 |
| 13,7 dBm | 125 | 1112 | 1112 | 593 | 83 | 0 | 0 | 0 |
| 17,2 dBm | 0 | 382 | 770 | 704 | 413 | 208 | 56 | 0 |
| 22 dBm | 0 | 60 | 162 | 162 | 162 | 158 | 113 | 74 |

Fig. 12a

| Entfernung | 0,15 m | 0,4 m | 1 m | 2 m | 4 m | 6 m | 8 m | 10 m |
|---|---|---|---|---|---|---|---|---|
| Messgröße (bspw. Empfangsleistung) | 10,4 dBm | 2,3 dBm | −5,1 dBm | −11,0 dBm | −17,0 dBm | −20,0dB m | −22,6 dBm | −24,3 dBm |
| Aus Messgröße verstärkte Steuergröße | 5 V | 4 V | 3V | 2 V | 1,5 V | 1,2 V | 1 V | 0,74 V |

Fig. 12b

| Steuergröße | 5 V | 4 V | 3V | 2 V | 1,5 V | 1,2 V | 1 V | 0,74 V |
|---|---|---|---|---|---|---|---|---|
| Aussteuerung / dBm | 9,3 dBm | 9,3 dBm | 13,7dBm | 17,2 dBm | 17,2 dBm | 17,2 dBm | 22 dBm | 22 dBm |

Fig. 12c

EP 4 057 525 B1

1400

„konventionell"

Datenrate t, mit Fehlerrate 1

Änderung des CNR (bspw. durch Änderung der Kanaldämpfung oder Aussteuerung, etc. —1410

Datenrate t, mit Fehlerrate 2, wobei Fehlerrate 2>Fehlerrate 1

Kanalschätzung —1420

CNR

CNR→Bit-Loading —1430

Signal Senden —1440

Datenrate t+1, mit Fehlerrate 1

t+1

Fig. 13

1500

Datenrate t, mit Fehlerrate 1

Änderung des CNR (bspw. durch Änderung der Kanaldämpfung oder Aussteuerung, etc. — 1510

Datenrate t, mit Fehlerrate 2, wobei Fehlerrate 2 > Fehlerrate 1

Kanalschätzung — 1520

CNR

CNR→Bit-Loading — 1530

Datenrate t+1, mit Fehlerrate 1

1535 — Hat sich 58 zwischen t und t+1 geändert?

Steuersignal 58(t)

nein

t+1

1540

Signal Senden

ja

1545 — Kanaldämpfung gestiegen?

ja

nein

1550

Transmitteraussteuerung↑ Arbeitspunkt↓

Transmitteraussteuerung↓ Arbeitspunkt↑

— 1560

Fig. 14

Datenrate t, mit Fehlerrate 1

Änderung des CNR (bspw. durch Änderung der Kanaldämpfung oder Aussteuerung, etc.) —1510

Daten t, mit Fehlerrate 2, wobei Fehlerrate 2>Fehlerrate 1

Kanalschätzung —1520

CNR

CNR→Bit-Loading —1530

Datenrate t+1, mit Fehlerrate 1

Senden mit Transmitterverstärkung

1670

t+1

1600

1635— Hat sich 58 zwischen t und t+1 geändert?

Steuersignal 58(t)

ja

1645— Kanaldämpfung gestiegen?

ja

nein

1550

Transmitteraussteuerung↑ Arbeitspunkt↓

Transmitteraussteuerung↓ Arbeitspunkt↑

—1560

Fig. 15

<u>1700</u>

```
┌─────────────────────────────────────────────┐
│        Anordnen eines Senders und eines      │
│   Empfängers für ein Übermitteln eines       │
│   optisch-drahtlosen Signals über            │──── 1710
│        einen optisch-drahtlosen Kanal        │
└─────────────────────────────────────────────┘
                      │
┌─────────────────────────────────────────────┐
│  Wiederholtes Senden eines optisch-drahtlosen│
│  Signals für unterschiedliche Entfernungen   │
│  zwischen dem Sender und dem Empfänger, so    │──── 1720
│  dass in jeder Entfernung eine Mehrzahl      │
│  von Aussteuerungen für das Senden verwendet  │
│  werden                                       │
└─────────────────────────────────────────────┘
                      │
┌─────────────────────────────────────────────┐
│  Ermitteln zumindest einer erzielbaren        │
│  Datenrate und/oder eines Rauschabstands      │──── 1730
│  am Ort des Empfängers für jedes der          │
│  gesendeten Signale                           │
└─────────────────────────────────────────────┘
                      │
┌─────────────────────────────────────────────┐
│  Ermitteln einer zu wählenden Aussteuerung    │
│  für jede der Entfernungen, unter deren        │──── 1740
│  Verwendung eine Datenrate oder der            │
│  Rauschabstand maximal ist                    │
└─────────────────────────────────────────────┘
                      │
┌─────────────────────────────────────────────┐
│  Zusammenstellen der zu wählenden             │
│  Aussteuerungen für die unterschiedlichen     │──── 1750
│  Entfernungen                                 │
└─────────────────────────────────────────────┘
```

Fig. 16

1800

Anordnen eines Senders und eines Empfängers für
ein Übermitteln eines optisch-drahtlosen Signals über
einen optisch-drahtlosen Kanal ⎯1810

Wiederholtes Senden eines optisch-drahtlosen Signals für
unterschiedliche Entfernungen zwischen dem Sender und
dem Empfänger, so dass in jeder Entfernung eine Mehrzahl
von Aussteuerungen für das Senden verwendet werden ⎯1820

Ermitteln zumindest einer erzielbaren Datenrate und/oder
eines Rauschabstands am Ort des Empfängers für jedes
der gesendeten Signale ⎯1830

Ermitteln eines zu wählenden Arbeitspunktes für jede
der Entfernungen, unter deren Verwendung eine Datenrate
oder der Rauschabstand maximal ist ⎯1840

Zusammenstellen der zu wählenden Arbeitspunkte
für die unterschiedlichen Entfernungen ⎯1850

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9528777 A

- US 20200136661 A1

**In der Beschreibung aufgeführte Nicht-Patentliteratur**

- **JARUWATANADILOK et al.** Modelling the Point-to-Point Wireless Communication Channel under the Adverse Wheather Conditions. *IEICE Transactions on Electronics* (9), 1455-1462
- A study of LED nonlinearity effects on optical wireless transmission using OFDM. **ELGALA, H** ; **MESLEH, R** ; **HAAS, H**. 2009 IFIP International Conference on Wireless and Optical Communications Networks. IEEE, 2009, 1-5
- **HUANG, XINGXING** ; **WANG, ZHIXIN** ; **SHI, JIA-NYANG** ; **WANG, YIGUANG** ; **CHI, NAN**. 1.6 Gbit/s phosphorescent white LED based VLC transmission using a cascaded preequalization circuit and a differential outputs PIN receiver. *Opt. Express,* 23 August 2015 (17), 22034-22042, http: //dx.doi. org/10.1364/OE.23.022034

- Visible light communication using laser diode based remote phosphor technique. **CHUN, H.** ; **RAJB-HANDARI, S** ; **TSONEV, D** ; **FAULKNER, G.** ; **HAAS, H.** ; **O'BRIEN, D**. 2015 IEEE International Conference on Communication Workshop (ICCW). IEEE, 2015, 1392-1397
- **YING, K.** ; **YU, Z.** ; **BAXLEY, R. J.** ; **QIAN, H** ; **CHANG, G** ; **ZHOU, G. T.** Nonlinear distortion mitigation in visible light communications. *IEEE Wireless Communications*, 2015, vol. 22 (2), 36-45
- **KHALID, A. M.** ; **COSSU, G** ; **CORSINI, R.** ; **CHOUDHURY, P** ; **CIARAMELLA, E**. 1-Gb/s Transmission Over a Phosphorescent White LED by Using Rate-Adaptive Discrete Multitone Modulation.. *IEEE Photonics Journal*, 2012, vol. 4 (5), 1465-1473
- **HONG, Y.** ; **WU, T** ; **CHEAN, L**. On the Performance of Adaptive MIMO-OFDM Indoor Visible Light Communications. *IEEE Photonics Technology Letters*, 2016, vol. 28 (8), 907-910, http://dx.doi. org/10.1109/LPT.2016.2517192